(19) Europäisches Patentamt
European Patent Office
Office européen des brevets

(11) **EP 2 478 335 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **10754937.0**

(22) Anmeldetag: **20.09.2010**

(51) Int Cl.:
*G01C 21/00* (2006.01)        *G01C 22/00* (2006.01)

(86) Internationale Anmeldenummer:
**PCT/EP2010/063778**

(87) Internationale Veröffentlichungsnummer:
**WO 2011/033100 (24.03.2011 Gazette 2011/12)**

(54) **VERFAHREN ZUR ERSTELLUNG EINER KARTE BEZÜGLICH ORTSBEZOGENER ANGABEN ÜBER DIE WAHRSCHEINLICHKEIT DER ZUKÜNFTIGEN BEWEGUNG EINER PERSON**

METHOD FOR CREATING A MAP RELATING TO LOCATION-RELATED DATA ON THE PROBABILITY OF FUTURE MOVEMENT OF A PERSON

PROCÉDÉ D'ÉTABLISSEMENT D'UNE CARTE RELATIVE À DES INFORMATIONS DE LOCALISATION SUR LA PROBABILITÉ DU DÉPLACEMENT FUTUR D'UNE PERSONNE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.09.2009 DE 102009041837**

(43) Veröffentlichungstag der Anmeldung:
**25.07.2012 Patentblatt 2012/30**

(73) Patentinhaber: **Deutsches Zentrum für Luft- und Raumfahrt e.V. (DLR)
51147 Köln (DE)**

(72) Erfinder:
• **ROBERTSON, Patrick
82541 Ammerland (DE)**
• **ANGERMANN, Michael
82166 Graefelfing (DE)**
• **KRACH, Bernhard
91161 Hilpoltstein (DE)**

(74) Vertreter: **Von Kreisler Selting Werner - Partnerschaft
von Patentanwälten und Rechtsanwälten mbB
Deichmannhaus am Dom
Bahnhofsvorplatz 1
50667 Köln (DE)**

(56) Entgegenhaltungen:
• **KRACH B ET AL: "Integration of foot-mounted inertial sensors into a Bayesian location estimation framework" PROCEEDINGS OF 5TH WORKSHOP ON POSITIONING, NAVIGATION AND COMMUNICATION (WPNC '08), 2008, Seiten 55-61, XP002613246 IEEE PISCATAWAY, NJ, USA ISBN: 978-1-4244-1798-8 in der Anmeldung erwähnt**
• **KRACH B ET AL: "Cascaded estimation architecture for integration of foot-mounted inertial sensors" POSITION, LOCATION AND NAVIGATION SYMPOSIUM, 2008 IEEE/ION, IEEE, PISCATAWAY, NJ, USA, 5. Mai 2008 (2008-05-05), Seiten 112-119, XP031340870 ISBN: 978-1-4244-1536-6 in der Anmeldung erwähnt**

**Beschreibung**

Die Erfindung betrifft ein Verfahren zur Erstellung einer Karte bezüglich ortsbezogener Angaben über die Wahrscheinlichkeit der zukünftigen Bewegung einer Person. So betrifft die Erfindung insbesondere ein Verfahren zur Erstellung von Wege-Karten und Raumplänen innerhalb und außerhalb von Gebäuden mittels Auswertung von Sensoren welche von Fußgängern getragen werden.

Hintergrund

Die Positionierung von Personen und Gütern wird mittlerweile häufig unter Verwendung der Satellitennavigation durchgeführt (z.B. GPS), was außerhalb von Gebäuden mittlerweile auch für Fußgänger zu akzeptablen Genauigkeiten führen kann. Innerhalb von Gebäuden, sowie in Gebieten mit starker Abdeckung des sichtbaren Bereichs des Himmels (z.B. Straßenschluchten, Einkaufspassagen, Innenhöfen, Bahnhöfen mit Teilüberdachung) kommt es oft zu starken Störungen durch Abschattung des direkten Signalpfades vom Satelliten oder zu Mehrwegefehlern. Um hierbei Abhilfe zu schaffen, nutzt man im Prinzip zwei Möglichkeiten - die auch kombinierbar sind:

1) Die Verwendung von weiteren Funksystemen zur Positionierung, die auch in Gebäuden empfangbar sind (z.B. Wireless LAN, Mobilfunk, Ultra-Wideband - UWB).

2) Die Verwendung von Sensorik, welche Informationen über die Bewegung des Fußgängers oder eines anderen Körpers geben (z.B. Inertialsensorik, Odometrie bei Robotern, barometrische Höhenmesser, passive und aktive optische Sensoren/Systeme).

Die Verbindung verschiedener Systeme, Signale und Sensoren nennt man Sensorfusion; sie ist besonders für dynamische Körper (also z.B. Fußgänger, Roboter) ein geeignetes Verfahren, um die Systeme optimal miteinander zu verbinden. Eine weitere Möglichkeit, die Genauigkeit zu verbessern, ist die Verwendung von Informationen über die Umgebung, wie z.B. Gebäudeplänen, In "Integration of Foot-Mounted Inertial Sensors into a Bayesian Location Estimation Framework", Krach, Bernhard und Robertson, Patrick (2008), in WPNC 2008, 2008-3-27, Hannover, und "Cascaded Estimation Architecture for Integration of Foot-Mounted Inertial Sensors", Krach, Bernhard und Robertson, Patrick (2008), in PLANS 2008, 2008-05-05 - 2008-05-08, Monterey, California, USA, ist gezeigt, dass das Vorwissen über die Gebäudepläne und die alleinige Verwendung einer am Schuh getragenen Inertialsensorik (Inertial Measurement Unit für alle 3 Raumachsen - IMU) zur eindeutigen Positionierung eines Fußgängers im Gebäude geeignet ist. Dieses bekannte Verfahren stellt eine wichtige Grundlage für diese Anmeldung dar und wird im Folgenden genauer erläutert:

Der Fußgänger trägt am Schuh eine IMU, dessen Beschleunigungs- und Drehraten-Signale in einem Extenden Kalman Filter (EKF) prozessiert werden, um die Lage und Position des Schuhs - und somit der Person - zu schätzen. Um die Problematik des unbegrenzt anwachsenden Fehlers ("Drift") zu begrenzen, verwendet man sogenannte Zero Velocity Updates (ZUPTs), um in den Ruhephasen des Fußes am Boden das EKF auf null Geschwindigkeit zu setzen (sogenannte Pseudomessung). Die Ruhephase des Fußes kann man recht zuverlässig und einfach bestimmen, indem man die Beschleunigungs- und Drehraten der IMU auswertet, denn bei jedem Schritt eines Menschen treten charakteristische Muster auf. Die Verwendung des EKF und der ZUPT wurde in dieser Weise von Foxlin eingeführt (siehe Pedestrian Tracking with Shoe-Mounted Inertial Sensors, Eric Foxlin, November/December 2005 Published by the IEEE Computer Society 0272-1716/05 2005 IEEE). Ein Nachteil dieses Verfahrens ist jedoch, dass die durch Drift steigenden Fehler der Orientierung um die Hochachse (engl.: "heading") mittels der ZUPT schlecht observierbar ist, und somit vor allem die Richtung der Person zunehmend ungenauer wird. Dies trifft auch - wenngleich in geringerem Maße- auf die zurückgelegte Weglänge zu. Ferner ist dieses System (alleine verwendet) grundsätzlich nur in der Lage eine *relative* Positionierung zu ermöglichen (also in Bezug zu einem bekannten Startpunkt). Wie eben beschrieben, konnte gemäß der Veröffentlichungen von Krach und Robertson ein zusätzliches Hypothesen-Filter (nachfolgend auch mit Particle-Filter bezeichnet) eingesetzt werden, um zusammen mit bekannten Karten die Position im Raum zu bestimmen, indem die "Particle" (auch "Hypothesen" genannt, im Folgenden aber mit "Particle" bezeichnet) nach der gemessenen Schrittschätzung des EFK bewegt werden (was mathematisch dem Ziehen eines neuen Zustandes des Particles aus der Proposal-Funktion des Particle-Filters entspricht), jedoch mit einer jeweils anderen angenommenen Abweichung von Schrittrichtung und Schrittlänge. Die Hypothesen "ergrunden" somit alle möglichen Abweichungen der EKF Schrittlängenbestimmung von der tatsächlichen Folge der Schritte der Person. Solche Hypothesen welche sich innerhalb der bekannten Wände und Hindernisse bewegen, werden entweder im "update" oder "prediction" Teil des "Particle-Filter"-(PF-)Algorithmus durch eine hohe Wahrscheinlichkeit "belohnt", und dürfen im nächsten Zeitschritt des PF-Algorithmus weitergeführt werden. Diejenigen Hypothesen, welche "Schritte durch Wände" repräsentieren, werden entweder sofort eliminiert oder mehr oder weniger stark bestraft. Nachteil dieses Verfahrens ist, dass das Wissen über die Wände (Gebäudeplan) bekannt sein muss.

(Gebäude-)Pläne bestehender Gebäude (bzw. Karten bestehender Wege) werden üblicherweise mit Mitteln aus der Vermessungstechnik erstellt, welche teuer und aufwändig sind. Oftmals sind Gebäudepläne aus einer Bau- oder Planungsphase eines Gebäudes in Papierform vorhanden; diese müssten entweder manuell eingescannt (mit anschließender Nachbereitung) oder automatisch eingescannt (digitalisiert) und verarbeitet werden, um beispielsweise Wände zu erkennen. Dieser Prozess ist teuer und fehlerträchtig. Ferner erfasst er verschiedene örtliche Gegebenheiten in/an einem Gebäude nicht, welche aber bei der Positionierung nach obigen Verfahren nützlich sein können, weil sie die mögliche Bewegung der Hypothesen einschränken - z.B. Hindernisse wie größere Möbel, Ausstellungsteile, große Pflanzenanordnungen, Absperrungen, temporär oder dauerhaft aufgestellte Stände, Theken, Bestuhlungen, Trennwände etc.

Gebäudepläne und Wegenetze sind auch außerhalb der Anwendung der reinen Positionierung von Wert: In der Simulation, Anpassung und Überprüfung von Fluchtwegen, in der Optimierung und Planung von Gebäuden, Strukturen und Ressourcen (z.B. Optimierung eines Flughafens oder Krankenhauses unter Verwendung des Wissens um räumliche Bewegungen von Menschen und Gütern), bei behördlichen Eingriffen (z.B. in der Terrorbekämpfung, bei Geiselbefreiungen oder verdeckten Ermittlungen) bei Notfällen wie Großbränden, bei Großereignissen (z.B. Analyse der Ströme großer Menschenmassen), bei Wegweisungssystemen, in der Logistik (z.B. Lagerhaltung, Prozessoptimierung) sowie bei elektronischen Assistenten wie elektronischen Wegweisern oder Museumsführern. Solche Plane sind für eine Vielzahl der aufgezählten Anwendungen besonders dann wertvoll, wenn nicht nur die Wände bekannt sind, sondern auch die tatsächlich von Menschen benutzten Wege - welche z.B. auch von Einrichtungsgegenständen und anderen Hindernissen bestimmt sein können.

Problemstellung

Es wird ein System und Verfahren benötigt, um Gebäudepläne und/oder Wegenetze insbesondere aus Sicht von Fußgängern zu ermitteln. Eine Anwendung hiervon ist die darauf aufbauende Positionierung und Navigation von Fußgängern in Gebäuden und außerhalb. Das System und Verfahren soll nicht auf Vermessungsinstrumenten angewiesen sein und sich schnell an neue Situationen und Änderungen der Umgebung anpassen. Ferner soll das System und Verfahren in der Lage sein, insbesondere solche Umgebungscharakteristika abzubilden, welche die tatsächliche Bewegung von Fußgängern stark beeinflussen.

Idee der Erfindung

Die Erfindung schlägt ein Verfahren zur Erstellung einer Karte bezüglich ortsbezogeher Angaben über die Wahrscheinlichkeit der zukünftigen Bewegung einer Person mit den Verfahrensschritten des Anspruchs 1 vor Einzelne Ausgestaltungen der Erfindung sind Gegenstand der Unteransprüche. Nach dem erfindungsgemäßen Verfahren ist vorgesehen, dass

- mindestens eine Person mit einem oder mehreren Sensoren (z.B. Trägheitssensoren, Drehratensensoren, optische Sensoren) für odometrische Messung (Odometrie) versehen wird (z.B. an einem Schuh angebracht), wobei die Odometrie auf Grund von inhärenten Messungenauigkeiten des/der Sensors/Sensoren (z.B. Winkelabweichungen, Längenabweichungen) fehlerbehäftet ist,
- sich die mindestens eine Person zu Fuß durch das räumliche Umfeld bewegt,
- aus den Messsignalen des/der Sensors/Sensoren Informationen über die Schrittlängen und/oder Schrittrichtung und/öder Orientierung des Sensors oder der Person ermittelt werden (Odometrie-Informationen Z genannt) und
- anhand dieser Odometrie-Informationen eine Karte erstellt wird, und zwar unter Verwendung eines Bayes'schen Schätzers (z.B. Particle-Filter, Rao-Blackwellisiertes Particle-Filter, Kalman-Filter, Monte-Carlo-Hypothesen-Filter, oder Mischformen solcher Filter), dessen Zustandsvariablen-Raum (z.B. Hypothesen-Raum der Particle eines Particle-Filters) eine Hypothese über sowohl den aktuellen Schritt (Schrittlänge und optional auch Bewegungsrichtungsänderung) der Person U, Odometrie-Fehler E (z.B. Driftparameter bezogen auf die ermittelte Schrittlängen und/oder Schrittrichtung und/oder Orientierung des Sensors oder der Person) und auch die ortsbezogenen Angaben über die Wahrscheinlichkeiten der zukünftigen Bewegung der Person beinhaltet.

Unter "Particle-Filter" im Sinne der Erfindung wird ein Hypothesen-Filter verstanden, bei dem es sich um ein nummerisches Verfahren handelt, mit dem eine Vielzahl von "Hypothesen" verfolgt werden, um ein dynamisches Schätzproblem näherungsweise zu lösen. Dabei stellt jede Hypothese bzw. jedes "Particle" einen Punkt im zumeist mehrdimensionalen zustandsvariablen Raum dar. Gemäß des sogenannten "Importance Sampling"-Prinzips wird dabei bei jedem Zeitschritt des nummerischen Verfahrens jeder Hypothese bzw. jedem "Particle" ein neuer Wert im zustandsvariablen Raum zugewiesen. Anschließend wird jede Hypothese (Particle) mit einem Gewichtungsfaktor gewichtet und somit bewertet.

Unter "Importance Sampling" wird im Rahmen dieser Erfindung eine nummerische Darstellung der Wahrscheinlichkeitsdichtefunktion P einer zumeist mehrdimensionalen Zustandsvariablen verstanden. Eine konkrete Realisierung dieser Zustandsvariablen entspricht einem Punkt im zustandsvariablen Raum. Beim "Importance Sampling" wird nun aus einer (auch als "Proposal Density" genannten) Wahrscheinlichkeitsdichtefunktion P eine Menge an konkreten Realisierungen einer Proposal-Zufallsvariablen gezogen. Diese "Proposal Density" sollte möglichst große Ähnlichkeiten zur gewünschten Wahrscheinlichkeitsdichtefunktion P aufweisen. Die Menge an somit "gezogenen" konkreten Realisierungen der Proposal-Zufallsvariablen stellt die Approximation zur Wahrscheinlichkeitsdichtefunktion P dar. Dabei wird jeder konkreten Realisierung der Zustandsvariablen ein Gewichtungsfaktor zugewiesen, welcher den Unterschied zwischen der "Proposal Density" und der gewünschten Wahrscheinlichkeitsdichtefunktion P berücksichtigt. Bei einer günstig ausgewählten "Proposal Density" wird es wenige konkrete Realisierungen der Proposal-Zufallsvariablen geben, welche vergleichsweise niedrige Wichtungen aufweisen und somit zwar Speicherbedarf und Rechenbedarf kosten, aber weniger zur genaueren Darstellung der Wahrscheinlichkeitsdichtefunktion P beitragen.

Ferner kann vorgesehen sein, dass die Karte während der Bewegung der Person durch das Umfeld oder nach einer Speicherung der Sensor-Messsignale bzw. der ermittelten Odometrie-Informationen zeitverzögert erstellt wird.

Die Berechnungen zur Erstellung der Karte können entweder auf einem mitgetragenen Endgerät (z.B. Mobiltelephon, PDA, tragbarer Rechner) oder auf einem Server durchgeführt werden.

Vorteilhafterweise wird die erstellte Karte entweder zur Positionierung bzw. Wegführung der Person oder zur verbesserten Positionierung bzw. Wegführung anderer Personen verwendet.

Zur Verbesserung der Odometrie-Informätionen können Messsignale/-daten weiterer Sensoren herangezogen werden, und zwar z.B. Satellitennavigation, Magnetkompass, WLAN Messungen zur Positionierung, Mobilfunkpositionsmessungen, UWB Messungen zur Positionierung und/oder dass Teilbereiche eines Plans des Umfeldes verwendet werden, um den Zustandsraum des erfindungsgemäß verwendeten Bayes'schen Schätzers zu beschränken.

Eine Weiterbildung des Verfahrens zeichnet sich dadurch aus, dass reelle oder virtuelle Referenzmarken verwendet werden, welche durch die Person erkannt werden können und deren Vorhandensein und ggf. auch deren Position als weitere Parameter in dem Zustandsraum des Bayes'schen Schätzers aufgenommen werden, und zwar z.B. durch eine in örtlicher Nähe der Person befindliche Mensch-Maschine-Schnittstelle (z.B. Knopf, Taster, Spracheingabe).

Ferner kann das Verfahren mit aus der Robotik bekannten optischen SLAM Verfahren kombiniert werden, indem die visuellen Merkmale, welche mit optischen Sensoren vermessen werden, in die Bestimmung des Zustandsraums des Bayes'schen Schätzers eingehen, und zwar z.B. als beitragende Faktoren in der Gewichtsberechnung und/oder "Importance Sampling" Schritt der Particle eingehen - z.B. als multiplikativer Term in dem Gewicht, wobei jedes Particle nun auch den Zustand jedes beobachteten visuellen Features trägt und dessen Ort und Lage im Raum sowie dessen Genauigkeit der aktuellen Beobachtung der Features und der restlichen Zustände des Particle anpasst und wobei ferner in derselben Art und Weise auch Features von Ultraschall oder Infrarot oder Mikrowellen Sensorsystemen verwendet werden können, die somit als Teil der erstellten Karte aufgefasst und verwendet werden und/oder die Erstellung der Karte auf Basis der Odometrie verbessern.

Ferner können magnetische Sensoren (z.B. elektronische Magnetfeldsensoren) verwendet werden, indem die jeweilige Stärke und Richtung des örtlichen Magnetfeldes als Merkmal aufgenommen wird und entsprechend einem visuellen Merkmal in die Berechnungen eingehen.

Es kann vorgesehen werden, dass die Person mit mehreren Sensoren versehen ist, um Odometrie-Fehler (z.B. die Drift) zu reduzieren, wobei sich durch Kombination der Messsignale der mehreren Sensoren (z.B. Mittelung der Odometrie-Informationen oder Mittelung der Rohdaten der Sensoren) eine verbesserte Odometrie gewinnen lässt.

Ferner kann vorgesehen sein, dass Sensoren für die Odometrie an anderen Körperstellen angebracht werden als an den Füßen/Schuhen, und dass aus der Pedestrian Dead Reckoning bekannte Verfahren zur Berechnung bzw. Verbesserung der Odometrie angewendet werden.

Als Proposal Density des Bayes'schen Schätzers (z.B. Particle-Filter) kann folgendes mathematisches Produkt gewählt werden: die bedingte Wahrscheinlichkeitsdichte der aktuellen Odometrie-Fehler E konditioniert auf die Odometrie-Fehler im letzten Zeitschritt, multipliziert mit der bedingten Wahrscheinlichkeitsdichte des aktuellen Schrittvektors U konditioniert auf die aktuellen Odometrie-Informationen Zu und der aktuellen Driftparameter E.

Unter Karte im Sinne dieser Erfindung werden ortsbezogene Angaben über die Wahrscheinlichkeit der zukünftigen Bewegung einer Person in einem räumlichen Umfeld (P-Karte) verstanden. Bei der Erstellung dieser Karten können Angaben über Übergangswahrscheinlichkeiten über Kanten von räumlich angeordneten Polygonen (z.B. Hexagone, Rechtecke, Dreiecke, andere Polygone) verwendet werden, wobei bei Umsetzung mittels eines Particle Filters die Kantenübergänge des Particles bei jedem Polygonübergang für dieses Particle gezählt und in eine Gewichtsberechnung aufgenommen werden.

Bei der Verwendung von Polygonen werden die Zähler zweckmäßigerweise nur für eine Kante zwischen zwei benachbarten Polygonen aktualisiert und gespeichert, und nicht für alle Kanten aller Polygone einzeln, wodurch sich der Speicherbedarf deutlich reduzieren lässt.

Vorzugsweise wird die aus der Robotik bekannte visuelle Odometrie angewendet (z.B. "Lucas-Kanade" oder "Focus of Expansion" Verfahren), wobei mittels optischer Sensoren (z.B. Kamera) die Veränderung der Erscheinung der Umgebung verwendet wird, um die Ortsänderung und Lageänderung der Person zu schätzen.

Bei Verwendung von Polygon-Repräsentationen (z.B. Hexagon) der Karte ist es zweckmäßig, wenn das Polygonraster an die Umgebung angepasst wird, um unterschiedlich dicht aufgebaut zu sein, wobei sich die Polygone überlappen können und/oder mehrere Polygonebenen hierarchisch eingesetzt werden und die Übergangszähler für jede Ebene betrennt berechnet werden und wobei in der Gewichtsberechnung der Particle (eines Particle-Filters) alle Ebenen eingehen (z.B. multiplikativ im Gewicht) und als Karte dann z.B. sämtliche derart erstellte Ebenen ausgegeben wird.

Bei der Verwendung von Polygonen für die Karte können die Polygone überlappend oder nicht-überlappend und/oder regelmäßig oder unregelmäßig sein und/oder in mehreren Ebenen aufgebaut sein.

Bei der Verwendung von Polygonen für die Karte kann statt eines Polygonrasters eine regelmäßige oder unregelmäßige Anordnung von Kreisen oder Ovalen oder anderer geometrischer Formen verwendet werden, wobei anstelle des Zählens eines Kantenübergangs der Winkel über den bei einem Schritt oder Teil des Schrittes die Form verlassen wird, erfasst wird und für diesen Winkel (in geeigneter beliebiger Quantisierung, d.h. WertebereichsAufteilung) ein Winkelbereichsübergangszähler ausgewertet und aktualisiert (analog zu den Kantenzählern bei den Hexagonen im Ausführungsbeispiel) wird, wobei bei einem überlappenden Formmuster stets diejenige Form selektiert wird, dessen Mittelpunkt am nächsten zum Particle liegt und analog zur Umsetzung mit Hexagonen die Winkelbereichsübergänge gezählt und in die Gewichtsberechnung aufgenommen werden.

Zweckmäßigerweise werden nicht nur die Zähler für Kantenübergänge bzw. Winkelbereichsübergänge pro Hexagon oder anderer Strukturen gezählt und ausgewertet, sondern für jede Kombination beliebig vieler vorheriger Übergänge.

Zur Kartenerstellung können bereits erstellte Karten von anderen Nutzern bzw. anderen Läufen einer Person verwendet werden (z.B. können die "a-priori" Zähler für Kantenübergänge von Polygon Karten auf bereits gemessene Ubergangszähler gesetzt werden und/oder es kann eine Iterative Verarbeitung erfolgen, bei der die Kartenerstellung für einen Odometrie-Datensatz immer wieder neu durchgeführt wird, unter Verwendung gegenseitig erstellter Karten).

Zweckmäßigerweise bildet die erstellte Karte drei Raum-Dimensionen ab (z.B. können für eine Anwendung in drei Dimensionen säulenartige geometrische Flächen mit polygonartigen Grundrissen und einem flachen oder schrägen Boden und Dach verwendet werden (Höhe dabei z.B. zwischen 0,5 m und 5 m)), wobei analog zur zweidimensionalen Ausführung der Polygon-Karte die Übergänge durch die dabei definierten Wände bzw. Boden- und Dach-Fläche gezählt und ausgewertet werden (bei zweidimensionaler Karte werden Übergänge über Linien betrachtet, bei zweidimensionaler Karte jedoch Übergänge durch Flächen).

Die Erfindung wird nachfolgend anhand eines Ausführungsbeispiels und unter Bezugnahme auf die Zeichnung näher erläutert.

### Fig. 1

Dargestellt ist schematisch das dynamische Modell für einen Bayes'schen Schätzer, wobei mit DBN ein dynamisches Bayes'sches Netzwerk, mit $Z^u$ die Schrittschätzung (Odometrie-Information), mit E die Odometrie-Fehlerzustände, mit U der tatsächliche Schritt und mit P die "Pose" bezeichnet sind und wobei M für die Berechnungsdauer (Kartenbestimmungsperiode) zeitinvariant, also für alle Zeitschritte k gleich ist. M bezeichnet die ortbezogenen Angaben über die Wahrscheinlichkeit der zukünftigen Bewegung einer Person in einem räumlichen Umfeld.

### Fig. 2

Hier sind die Definitionen der "Pose" (Position im Raum) und des Schrittvektors für die nachfolgenden Figuren und Beispiele gezeigt. Mit $P_{k-1}$ ist die (alte) Position im Raum zum Zeitpunkt k-1 und mit $P_k$ ist die (neue) Position im Raum zum Zeitpunkt k bezeichnet. $U_k$ bezeichnet den Schrittvektor, d.h. die Translation der neuen Position in Bezug auf die alte Position. Der Wert k ist eine ganze Zahl. Sie wird bei jedem Takt um eins erhöht. Dies kann beispielsweise entweder zu regelmäßigen Zeitpunkten geschehen (z.B. jede Sekunde), oder wenn die Odometrie einen neuen Schritt berechnet hat, oder wenn die durch die Odometrie berechnet Schrittlänge eine Mindestlänge überschreitet (in Bezug auf k-1).

### Fig. 3

Es werden zwei Beispiele für Odometrie-Berechnungen grafisch dargestellt, wobei jeweils Fußgänger etwa 10 Minuten in einer Büroumgebung liefen. Jeder Punkt stellt die geschätzte Position des Fußes dar, zum Zeitpunkt zu dem der Fuß zum Stehen kam (also ein Schritt berechnet wurde). Die Odometrie-Fehler führen zu einer Abweichung dieser Positionen von den wahren Positionen.

### Fig. 4

Diese Figur zeigt schematisch eine Systemübersicht. Der Nutzer kann optional weitere Sensoren wie beispielsweise GPS- oder WLAN-Empfänger, einen elektrischen Kompass, weitere Schrittzähler, eine Kamera o.dgl. mitführen. Eine am Fuß bzw. Schuh montierte IMU kann optional vorgesehen sein, wenn die Odometrie durch andere Sensoren ermöglicht wird. Die Komponenten des Blocks 2b können beliebig im System verteilt sein, nämlich beispielsweise im Nutzergerät und/oder am Schuh und/oder als Recheneinheit im Datennetzwerk.

**Fig. 5**

Diese Figur zeigt schematisch eine Systemübersicht. Der Nutzer kann optional weitere Sensoren wie beispielsweise GPS- oder WLAN-Empfänger, einen elektrischen Kompass, weitere Schrittzähler, eine Kamera o.dgl, mitführen. Eine am Fuß bzw. Schuh montierte IMU kann optional vorgesehen sein, wenn die Odometrie durch andere Sensoren ermöglicht wird. Die Komponenten des Blocks 2a können beliebig im System verteilt sein, nämlich beispielsweise im Nutzergerät und/oder am Schuh und/oder als Recheneinheit im Datennetzwerk.

**Fig. 6**

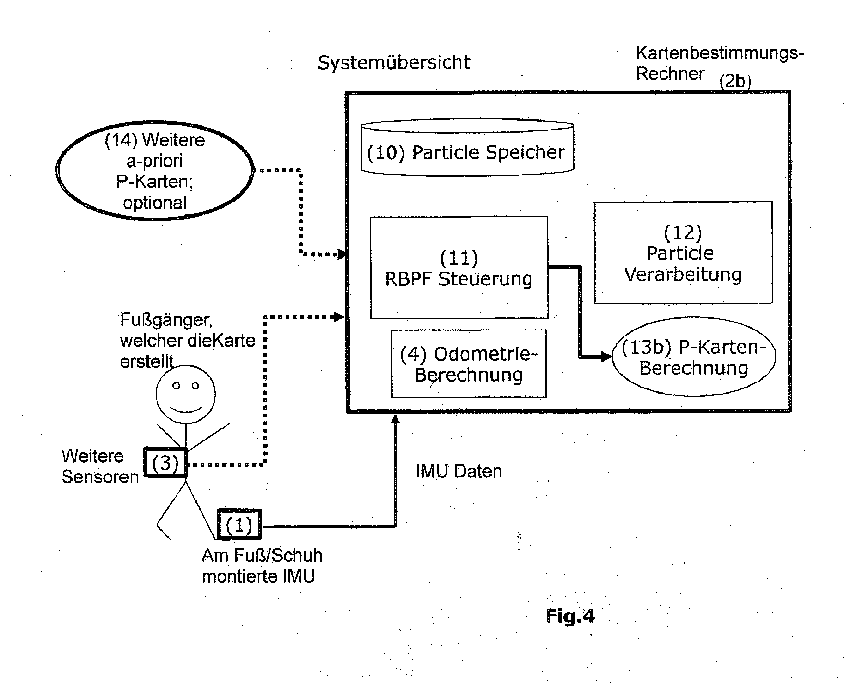

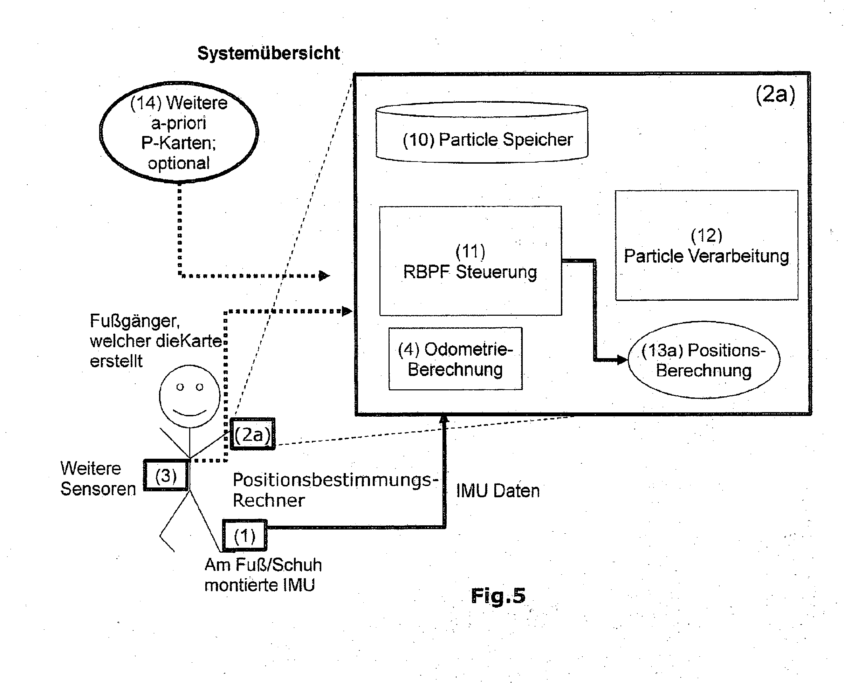

In dieser Figur ist eine schematische Darstellung des funktionalen Zusammenhang zwischen den Blöcken 3, 4 und 14 der Fign. 4 bzw. 5 dargestellt. Die Blöcke 5, 6 und 8 speichern ihre Ergebnisse bei jedem Zeitschritt k im Speicher als Hypothesen-(Particle-)Zustand ab. Die RBPF-Steuerung erfolgt in der Reihenfolge der Blöcke 5, 6, 7, 8 und 9. Dann erfolgt die Neuberechnung des Gewichts aus den Blöcken 7 und 8 sowie gegebenenfalls ein Resampling.

**Fig. 7**

Diese Figur zeigt eine beispielhafte Definition der Koordinatensysteme, Winkel- und Schritt-Vektoren, wie sie in einem Ausführungsbeispiel der Erfindung verwendet werden können.

**Fign. 8 und 9**

Diese Figuren zeigen den gesamten Verarbeitungsprozess, und zwar ausgehend von den Rohdaten bis zur Odometrie-Informationsbestimmung und weiter bis zum Ziehen von $E^l_k$ und $U_k$.

**Fig. 10**

Diese Figur zeigt beispielhaft zwei benachbarte Hexagone, die für die Erstellung der P-Karte verwendet werden können.

**Fig. 11**

Diese Figur zeigt ein Beispiel für eine Hexagon-P-Karte mit Hexagon-Raster und Hexagon-Kanten, wobei hier ein Schritt zu einem der benachbarten Hexagone führt.

**Fig. 12**

Diese Figur zeigt ein Beispiel für eine Hexagon-P-Karte mit Hexagon-Raster und Hexagon-Kanten, wobei in diesem Beispiel ein Schritt zu einem der übernächsten Hexagone fuhrt.

**Fig. 13**

Diese Figur zeigt die Darstellung einer Person (teilweise hinter dem Hexagon) in einer räumlichen Umgebung.

**Fig. 14**

Diese Figur zeigt zwei Beispiele für nach dem erfindungsgemäßen Verfahren erstellte Wegepläne in einem Gebäude.

Die Idee der Erfindung ist das Erlernen einer geeigneten Karte der Umgebung (also eine Art Gebäudeplan oder Wegenetz oder Mischformen), indem Daten von Inertial-Sensoren, welche von einzelnen oder mehreren Fußgängern getragen werden, ausgewertet werden. Dies geschieht erfindungsgemäß unter Verwendung eines Bayes'schen Schätzers, wie zum Beispiel eines Rao-Blackwellisierten Particle-Filters (RBPF). Solche Verfahren sind grundsätzlich aus der Robotik bekannt (siehe Literatur zu SLAM - Simultaneous Lokalization and Mapping), bisher jedoch nur unter Verwendung von Visuellen Sensoren oder Radar/Sonar/Laserranging Sensoren, welche die physikalische Umgebung abtasten oder mittels Bildverarbeitung erkennen und in einem Bayes'schen Filter (z.B. RBPF oder EKF) als Sensorsignal verarbeiten. Nach der Erfindung beruht die Kartenbildung alleine auf der Schrittschätzung - kann aber durch weitere Sensoren und Informationen verbessert werden.

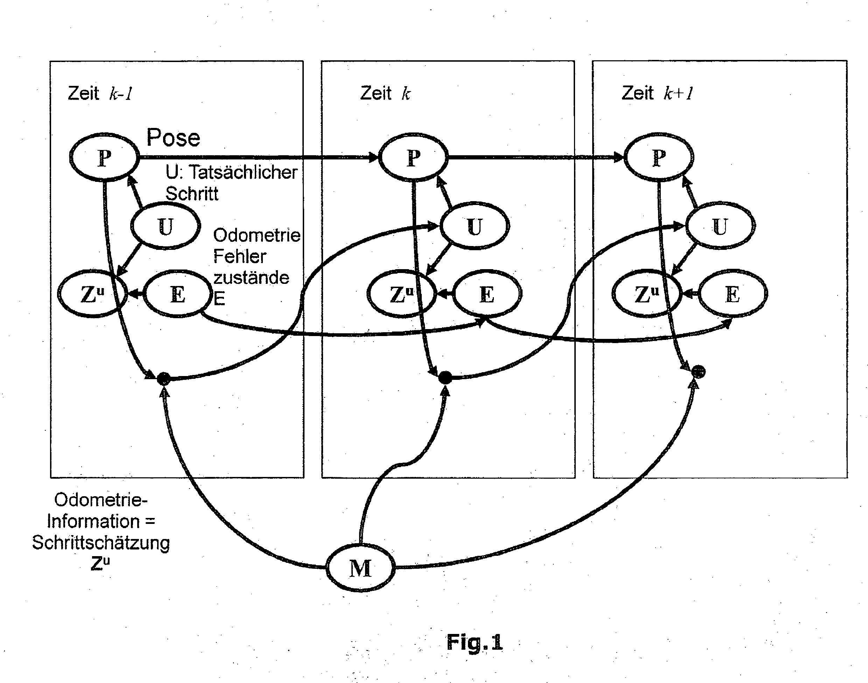

Ein Beispiel für das zugrunde liegende dynamische Modell für ein Bayes'sches Filter zeigt Fig. 1. Dargestellt ist ein Dynamisches Bayes'sches Netzwerk (DBN), welches die kausalen Zusammenhänge zwischen den beteiligten Zufallsvariablen repräsentiert. Pfeilrichtung bedeuten im bekannten Sinne der DBN als kausale Netzwerke: Wirkungsrichtung der Kausalität (Uk wirkt kausal auf Pk ein, nicht umgekehrt). Die Bedeutung der Variablen wird im nachfolgenden Text erläutert. Dieses DBN ist in dieser Anmeldung dargestellt, weil es in der Fachwelt der Bayes'schen-Schätzalgorithmen zur Verdeutlichung und zur Vermeidung von Unklarheiten üblich ist und weit verbreitet verstanden wird.

Die Schrfttschätzung wird im Folgenden als Odometrie bezeichnet: Es können für die Odometrie die von Foxlin in der obigen Veröffentlichung beschriebenen Verfahren eingesetzt werden, aber auch andere, welche nicht unbedingt eine am Schuh befestigte Sensorik erfordern (z.B. Messung an anderen Körperstellen (wie Hüfte, Hosentasche) auch in Kombination mit Magnetkompass; diese werden oft als Pedestrian Dead Reckoning bezeichnet). Dabei wird davon ausgegangen, dass die Odometrie immer mehr oder weniger gute Schätzungen des Schrittvektors (diese Schrittschätzung wird als Zu bezeichnet und in dieser Anmeldung teilweise auch als Odometrie-Information bezeichnet, und ist die Schätzung des tatsächlichen Schrittvektors U) des Fußgängers ermittelt (Schrittschätzung: Raumvektor in 2D oder 3D bezogen auf den letzten Schritt oder äquivalent dazu, insgesamt bezogen auf einen anderen Zeitpunkt als den Startpunkt.

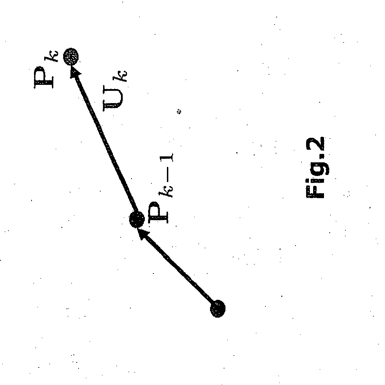

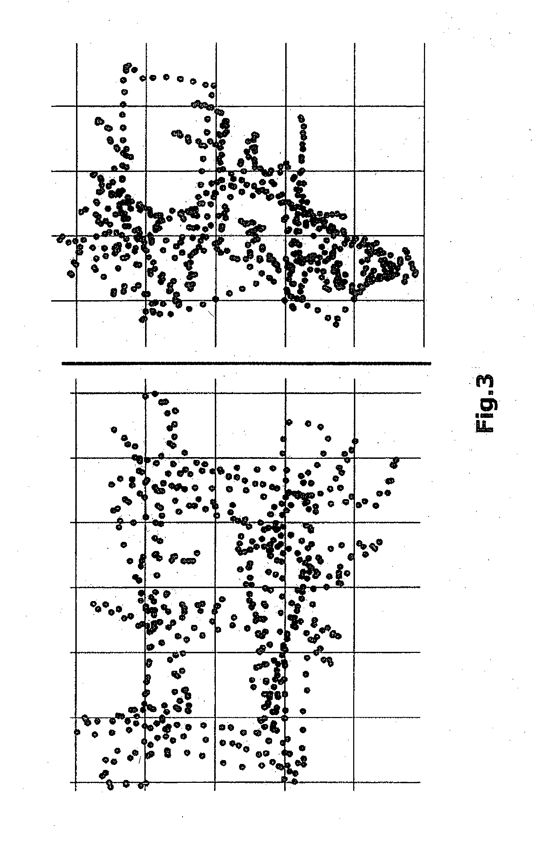

Siehe auch Fig. 2). Zwei Beispiele für die Verteilung der geschätzten Position gemäß Odometrie-Berechnung finden sich in Fig. 3. Anzumerken ist, dass die Definition eines Schrittes nicht nur eine Ortstranslation des Fußes oder der Person sondern auch eine Veränderung der Raumlage (Orientierung) des Fußen oder der Person umfassen kann. Wenn also ein Mensch einen Schritt tätigt, dann verändert sein Fuß bzw. der darauf befestigter Sensor sowohl seine Position im Raum als auch die Lage (Richtung); ebenso verändert dabei der Körper des Menschen seine Position (in Bezug auf eine Stelle am Körper) sowie die räumliche Ausrichtung einer Körperachse (z.B. Schulterlinie oder Beckenausrichtung). Die Translation bzw. Richtungsänderung von Fuß und Person stehen aber in einem engen Verhältnis zueinander. In der zweidimensionalen Welt bestehend aus Koordinaten x und y ist die Richtung immer bezogen auf eine Richtung in der x-y Ebene.

Gemäß Fign. 4 und 5 "Systemübersicht Kartenbestimmung" trägt der Nutzer eine z.B. am Fuß/Schuh montierte IMU (1) und/oder weitere Sensoren (3). Ein Positionsbestimmungsrechner (2a) führt die Berechnung der Position durch, wie im Folgenden beschrieben.

Gemäß der Erfindung beim beispielhaften Einsatz eines Particle-Filters werden jedem Particle des Particle-Filters (bestehend aus den Komponenten (11), (12) und (10)) folgende Zustandsvariablen zugeordnet:

1) Verschiedene geeignete zeitvariable oder zeitfeste Odometrie-Fehlerzustände E, um die möglichen Fehler wie feste Abweichungen und/oder Drifts der zugrundeliegenden Odometrie abzubilden (z.B. Winkelabweichung des Schrittvektors Zu pro Sekunde, Änderungsrate der Winkelabweichung, Längenabweichungsfaktor, feste Winkelabweichungen), für sowohl den aktuellen als auch den letzten Zeitschritt des Particle-Filter.

2) Ortskoordinaten und ggfs. Orientierung im Raum in einem geeigneten relativen oder absoluten Orts-Koordinatensystem (z.B. WGS-84 oder in Bezug auf eine Gebäudeecke oder relativ bezogen auf einen Startpunkt), für sowohl den aktuellen als auch den letzten Zeitschritt des Particle-Filter. Dabei ergibt sich der aktuelle Schrittvektor U als Änderung der Position und der Orientierung vom letzten zum aktuellen Zeitschritt. Diese Zustandsvariable wird als Pose P bezeichnet und ist in Fig. 2 zusammen mit dem Schrittvektor abgebildet.

3) Eine geeignete Repräsentation von ortsbezogener Angaben über die Wahrscheinlichkeit der zukünftigen Bewegung einer Person in einem räumlichen Umfeld - hier als P-Karte bezeichnet. Ausführungsbeispiele werden im Folgenden aufgeführt.

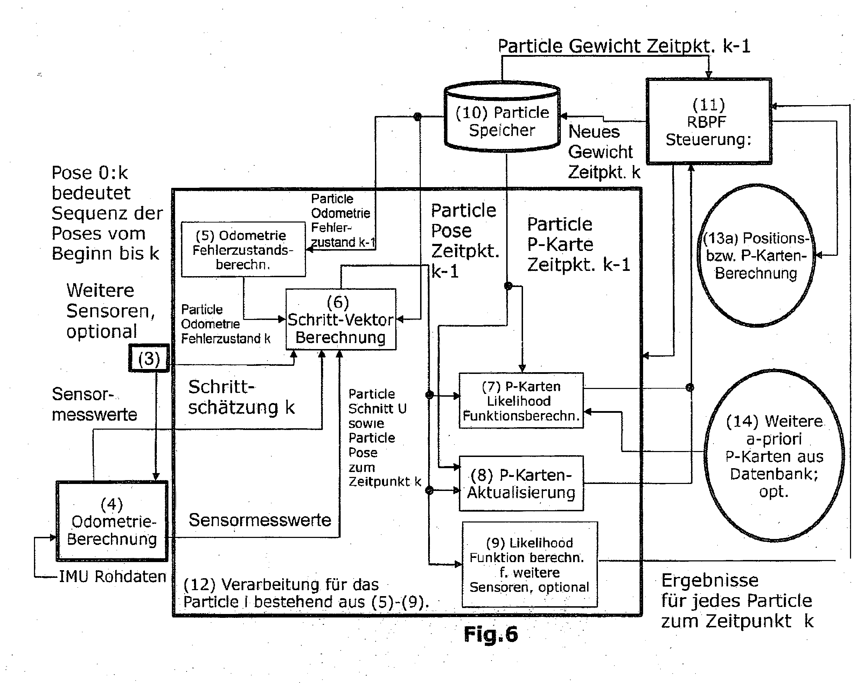

Dem Particle-Filter werden bei jedem Zeitschritt die Odometrie-Informationen (also der sich aus der Einheit (dem Block) 4 der Fign. 4 und 6 Schrittvektor, ggf. mit Information über dessen Zuverlässigkeit (z.B. in Form einer Wahrscheinlichkeitsverteilung oder Varianz) zugeführt. Die Particle werden nun gemäß des bekannten Particle-Filters Algorithmus in zweierlei Weisen behandelt:

a) Die Zustandsvariablen werden neu bestimmt - möglicherweise unter Zuhilfenahme eines Zufallsgenerators. Dies ist der bekannte "importance sampling" oder "Proposal Density Drawing" Schritt des Particle-Filters. Dies wird in den Komponenten (5), (6), und (8) der Fig. 6 durchgeführt.

b) Jedes Particle wird neu gewichtet. Dies ist der "weight update" Schritt des Particle-Filters. Dies wird in den Komponenten (7), (11) und optional (9) der Fig. 6 durchgeführt.

Wie genau diese beiden Schritte ausgeführt werden, ist zum Teil frei auswählbar und eine Funktion der Beschaffenheit der Unsicherheit der Odometrie und der oben gemäß Ziff. 3) gewählten P-Karten-Darstellung. Hat man die Auswahl der sogenannten "Proposal-Function" getroffen, so ist die im Bayes'schen Sinne optimale "weight update" Berechnung festgelegt. Bekannte Vorgehensweisen werden in der Fachwelt z.B. als "likelihood Particle-Filter" oder "transition probability proposal function" bezeichnet.

Die Wahl der Repräsentation der P-Karte ist frei. Um nützlich zu sein, sollte sie jedoch einigen mathematischen und praktischen Kriterien standhalten, die im Folgenden aufgeführt sind. Die P-Karte wird aufgefasst als die Wahrscheinlichkeitsdichte einer geeigneten Zufallsvariablen, M, der Karte, wie weiter unten beschrieben ist. Sie sollte so gewählt sein, dass die Komponente (8) (Fign. 4 und 6) die bedingte Wahrscheinlichkeitsdichte zumindest näherungsweise $p(M|P_{0:k})$ bestimmen kann. Hierbei bedeutet $P_{0:k}$ die ganze Folge der Pose vom Anfang der Messungen (Zeitschritt 0) bis zum aktuellen Zeitschritt k. Insbesondere soll M so gewählt sein, dass $p(M|P_{0:k})$ mit der Zeit, also mit aufsteigendem k, eine im Wesentlichen zunehmend geringere Entropie im Sinne der bekannten Shannon Entropie aufweist. Ebenso muss die bedingte Wahrscheinlichkeit $p(U_k|P_{0:k-1},M)$ zumindest näherungsweise bestimmbar sein (Komponente (7) in Fign. 4 und 6). Dieser Term repräsentiert den Einfluss der P-Karte M auf den nächsten Schritt zum Zeitpunkt k, gegeben bei einer bestimmten Pose-Historie bis Zeitpunkt k-1. Vorteilhafterweise kann man aber $p(U_k|P_{0:k-1},M) = p(U_k|P_{k-1},M)$ annähern, also den Einfluss älterer Poses vernachlässigen, wie dies bei den später dargestellten Hexagon P-Karten der Fall ist.

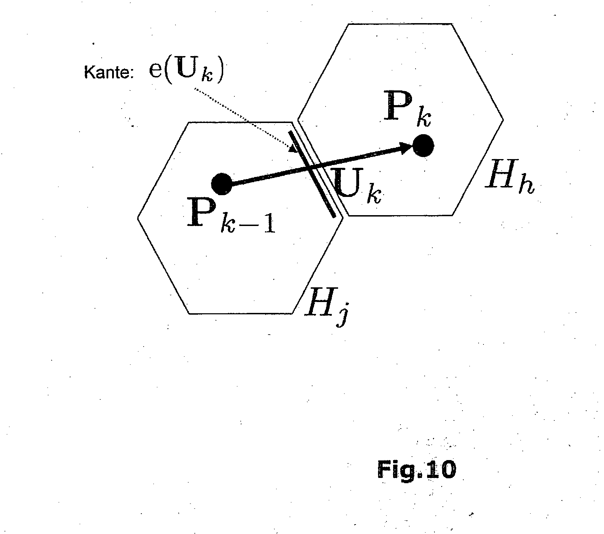

Ein Beispiel für M und diese Verteilung ist aber eine Hexagon-P-Karte. M stellt Kanten-Übergangswahrscheinlichkeiten in einem Hexagon-Raster dar. Die Wahrscheinlichkeitsdichte $p(M^i|P^i_{0:k})$ für Particle i ist in mathematische Schreibweise eine geeignete Repräsentation einer die Bewegung beeinflussenden Umgebung (P-Karte). M ist demnach eine Zufallsvariable. $p(M|...)$ folgt einer bekannten Beta-Verteilung. Bei der Neuberechnung von $p(M|...)$ wird der Übergang der Pose von Zeitpunkt k-1 auf k verwendet und die entsprechenden Zähler der Beta-Verteilung um eins erhöht (siehe auch die Fign. 10, 11 und 12). M wird so gewählt, dass

$$p(U_k^i|P_{0:k-1}^i, M^i)$$

berechnet werden kann, also der Einfluss von M auf den nächsten Schritt zum Zeitpunkt k berechnet werden kann, und zwar bei gegebener Pose-Entwicklung von 0 bis Zeitschritt k-1. Für das obige Beispiel für Hexagon-P-Karten gilt:

$$p(\mathbf{U}_k{}^i|\mathbf{P}_{0:k-1}{}^i, \mathbf{M}^i) = p(\mathbf{U}_k{}^i|\mathbf{P}_{k-1}{}^i, \mathbf{M}^i) = konst \cdot \left\{ \mathbf{M}_{h(\mathbf{P}_{k-1})}^{e(\mathbf{U}_k)} \right\}^i$$

Ebenso muss das Integral

$$w_k^i = k_k \cdot w_{k-1}^i \cdot \int_{\mathbf{M}^i} p(\mathbf{U}_k{}^i|\mathbf{P}_{0:k-1}{}^i, \mathbf{M}^i) \cdot p(\mathbf{M}^i|\mathbf{P}_{0:k-1}^i) d\mathbf{M}^i$$

zumindest näherungsweise bestimmbar sein (z.B. in Komponente (7) der Fign. 4 und 6). Für Particle i zum Zeitpunkt k wird w_k neu berechnet. Die Wahrscheinlichkeitsdichte ist der Einfluss der Zufallsvariablen M auf die Bewegung (Schritt U) zum Zeitpunkt k. Der letzte Term des Integrals ist das Ergebnis von Komponente (8) aus dem letzten Zeitschritt; also die alte P-Karte. Komponente (7) berechnet oder approximiert dieses Integral entweder implizit (d.h. das Integral ist analytisch ausdrückbar) oder durch nummerische oder analytische Integration zur Laufzeit. Die Normalisierungs-Konstante k_k wird so berechnet, dass die Summe der w_k über alle Particle zu eins summiert. Bei Hexagon-P-Karten ist $p(M|...)$ vollständig durch die Kantenzähler und a-priori-Zähler spezifiziert. Das Integral ist dann generell analytisch lösbar. Das Integral muss nicht zur Laufzeit ausgewertet werden, ebenso wenig die Terme im Integral (siehe Fig. 10).

Vorteilhafterweise wählt man M und $p(M|P_{0:k})$ so, dass das Integral analytisch bestimmbar ist, wie dies bei den später dargestellten Hexagon P-Karten der Fall ist.

Nach der Berechnung des Gewichts aller Particle werden in vorteilhafter Weise die Gewichte auf Summe 1 normiert und ein optionaler (in der Fachwelt bekannter) "resampling" Schritt durchgeführt (dies geschieht z.B. ebenfalls in Komponente (11) der Fign. 4 und 6).

Als Ausführungsbeispiel sei hierfür genannt, dass als "Proposal Density" für das Ziehen jedes Particles bei jedem Zeitschritt in vorteilhafter Weise folgendes mathematisches Produkt gewählt werden kann:

Die bedingte Wahrscheinlichkeitsdichte der aktuellen Odometrie-Fehler E konditioniert auf die Odometrie-Fehler im letzten Zeitschritt (z.B. in Komponente (5) der Fign. 4 und 6), multipliziert mit der bedingten Wahrscheinlichkeitsdichte des aktuellen Schrittvektors U konditioniert auf die aktuellen Odometrie-Informationen $Z^u$ und der aktuellen Odometrie-Fehler E (z.B. in Komponente (6) der Fign. 4 und 6).

Dabei wird in den Komponenten (5) und (6) wie folgt verfahren:

(5): ziehe ein neues $\mathbb{E}_k^i$ aus der Verteilung:

$$p(\mathbb{E}_k|\mathbb{E}_{k-1}^i)$$

Beispiel für E und diese Verteilung:

E stellt eine zeitvariante Schrittwinkelabweichung ("Bias") und eine zeitliche Änderungsrate der Schrittwinkelabweichung ("Drift") von Zu dar. Beide Zustandsgrößen sind unabhängig und folgen einem "random walk"-Zufallsprozess und stellen somit jeweils einen von zwei multiplikativen Faktoren von p(E|...) dar.

(6): Ziehe einen neuen Schrittvektor $U_k^i$ aus der Verteilung:

Neuer Odometrie-Fehlerzustand
für Particle i

$$p(\mathbf{U}_k | \mathbf{Z}_k^U, \mathbf{E}_k^i)$$

Schrittschätzung zum Zeitpunkt k (2D Vektor)

Praktisch bedeutet dies, dass für jedes Particle zuerst ein neuer Odometrie-Fehler-Parametersatz zufällig oder pseudozufällig gezogen wird - konditioniert auf die alten; und dann bezogen auf diesen neuen Odometrie-Fehler-Parametersatz und der aktuellen Odometrie-Informationen ein neuer Schrittvektor zufällig oder pseudozufällig gezogen wird ("Proposal Density Drawing"). Mit dem gewählten neuen Schrittvektor wird die neue Position und Orientierung berechnet und der Systemzustand des Particle wird gespeichert. In der Praxis können als Verteilung, aus der gezogen wird, die Normalverteilung genommen werden, die Varianzen ergeben sich dabei aus den tatsächlichen GuteEigenschaften der Odometrie-Sensoren und können z.B. experimentell ermittelt werden.

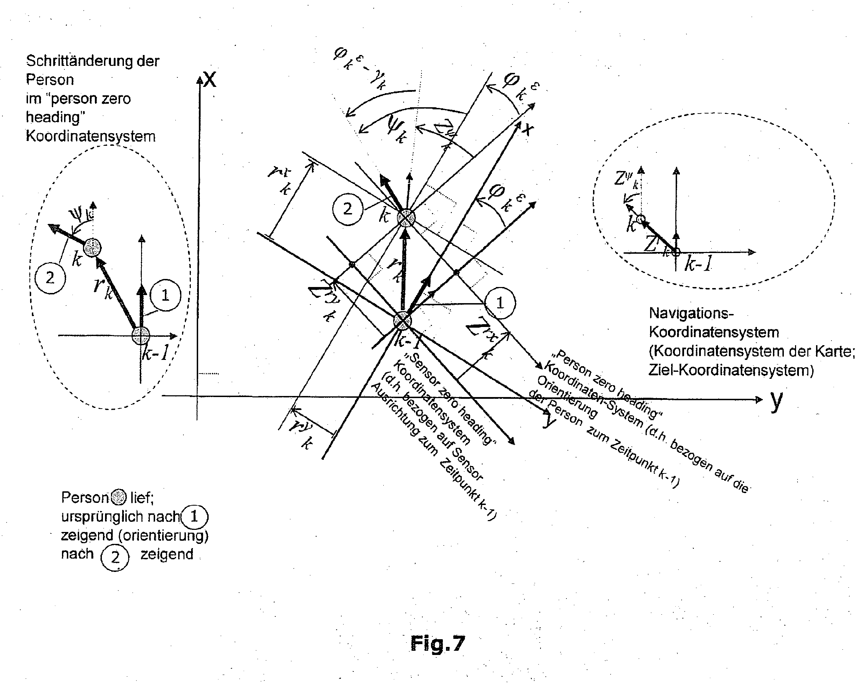

Fig. 7 zeigt das beispielhaft verwendete Koordinatensystem mit Winkeln und Schrittvektoren. Für die verwendete Symbolik gilt:

Odomemtrie_Information: $Z^U_k = \{Z^r_k + n^r_k; Z^\psi_k + n^\psi_k\} = \{(Z^{rx}_k + n^x_k, Z^{ry}_k + n^y_k); Z^\psi_k + n^\psi_k\}$

Tatsächlicher Schritt $U$: $U_k = \{r_k; \psi_k\} = \{(r^x_k, r^y_k); \psi_k\}$; mit $\|r_k\| = \|Z^r_k\|$

Wir bestimmen aus den Rohdaten: $Z^U = Z^r_k$ + Rauschvektor $n^r_k$; und Richtungsaänd. $Z^\psi_k$ + Rauschen $n^\psi_k$ U stellt den tatsächlichen x,y-Schrittvektor $r_k$ dar, (rot); sowie die tatsächliche Orientierungsänd der Person $\psi_k$ $\varphi_k$6: Winkelabweichung zwischen Orientierung der Person und Sensor-Orientierung

$\gamma_k$: Odometrie Richtungsdrift $\gamma_k = Z^\psi_k - \psi_k$

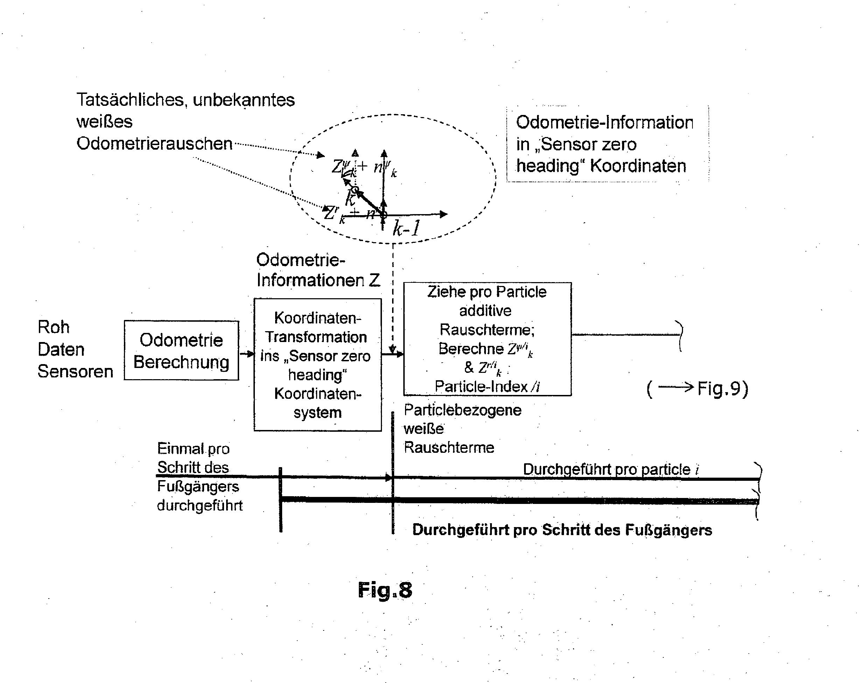

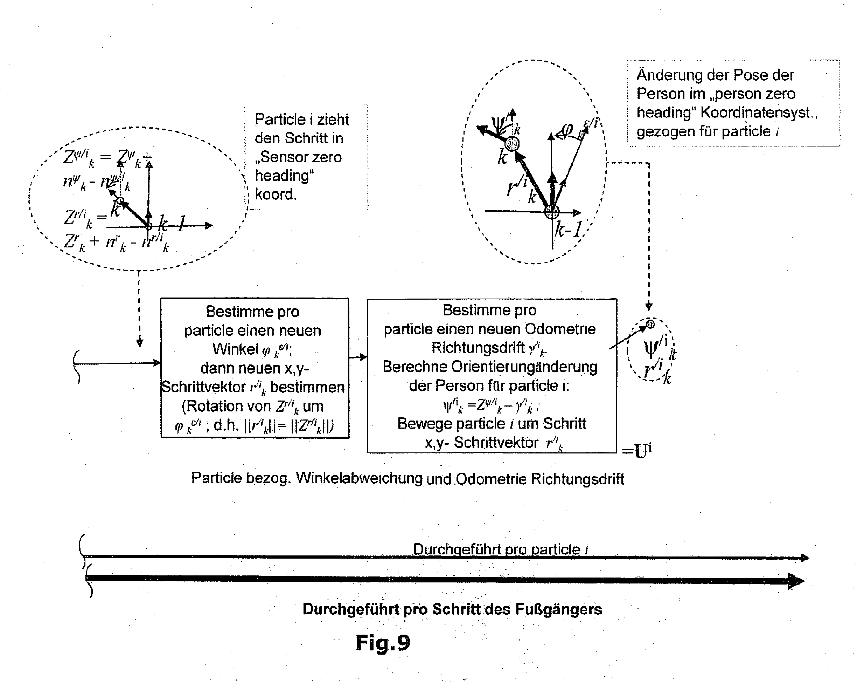

Der gesamte Verarbeitungsprozess ist in den Fign. 8 und 9 gezeigt. Dabei gilt: :

$E^i$ $\{$ Rauschterme werden zufällig aus einer Mittelwertfreien Normalverteilung gezogen
Bestimmung von $\varphi_k^{\delta i}$: folgt einem „random walk" Prozess; ggfs begrenzt
Bestimmung von $\gamma^i_k$ folgt einem „random walk" Prozess

(Anmerkung: U$^i$ ist im "Person zero heading" Koordinatensystem; d.h. bezogen auf die letzte Orientierung der Person zum Zeitpunkt k)

Nun erfolgt in vorteilhafter Art und Weise gemäß der in den Fign. 10, 11 und 12 gezeigten beispielhaften Realisierung mittels Hexagon P-Karten die Berechnung des Gewichts des Particle wie folgt ("weight update", siehe Komponenten (7,9,11) der Fign. 4 und 6):

Neues Gewicht = altes Gewicht mal
Produkt_{j=0 bis Ns-1} (N(h(j), e(j))+a(h(j), e(j))) / (N(h(j)) + a(h(j))); falls der neue Schritt das Particle aus einem Hexagon herausführt
oder:

Neues Gewicht = altes Gewicht mal 0,25; falls der neue Schritt das Particle nicht aus einem Hexagon herausführt.

Dabei gilt für Fig. 10, dass Ns = 2 ist, da vom Schritt K lediglich zwei Hexagon betroffen sind. Ferner gilt

$$\mathbf{M}_{h(\mathbf{P}_{k-1})}^{e(\mathbf{U}_k)} \ \hat{=}\ \mathbf{M}_{\tilde{h}}^{\tilde{e}} \ \hat{=}\ P(\mathbf{P}_k \in H_j | \mathbf{P}_{k-1} \in H_h)$$

$$\text{so, dass } H_j \text{ aus } H_h \text{ ueber } \mathbf{U}_k \text{ erreicht wird,}$$

$$\text{und } j \neq h;$$

Für Ns=2 gilt ferner,

$$w^i = k_k \cdot w_{k-1}^i \cdot \left\{ \frac{N_{\tilde{h}}^{\tilde{e}} + \alpha_{\tilde{h}}^{\tilde{e}}}{N_{\tilde{h}} + \alpha_{\tilde{h}}} \right\}^i$$

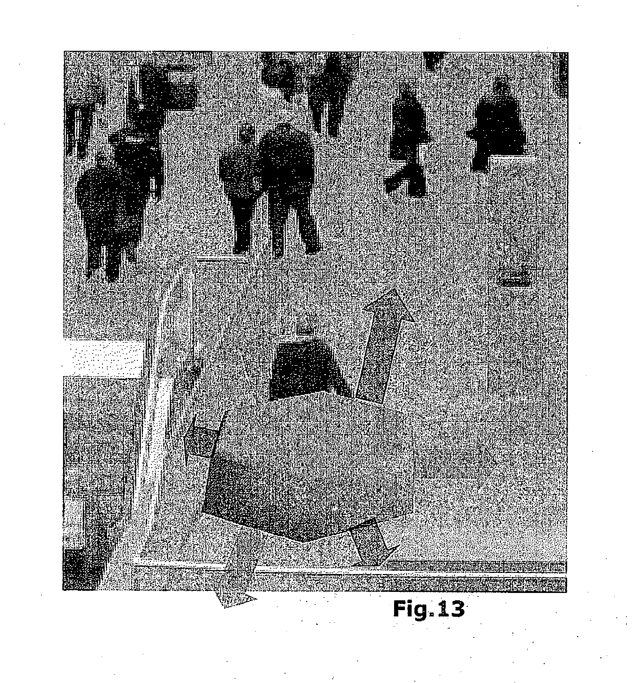

N sind Kantenzähler bzw. die Summe für alle Kanten eines Hexagons. Analog dazu sind alpha die a-prior-Zähler.

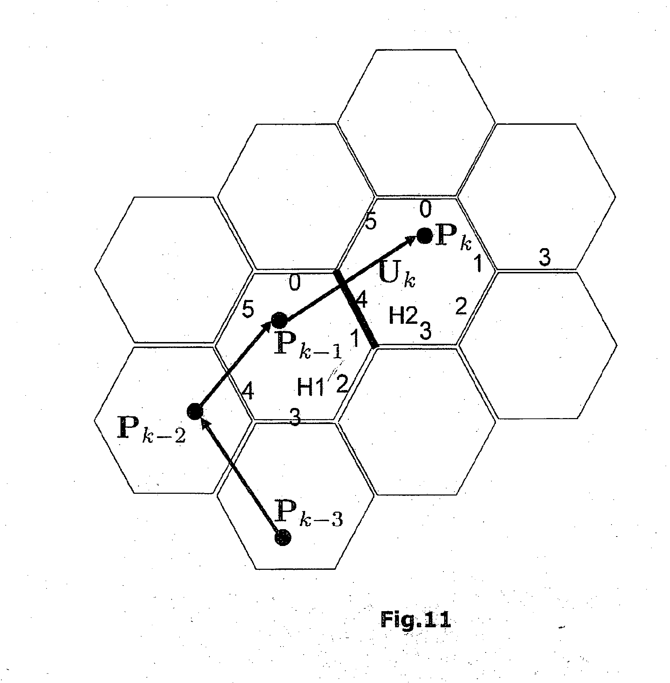

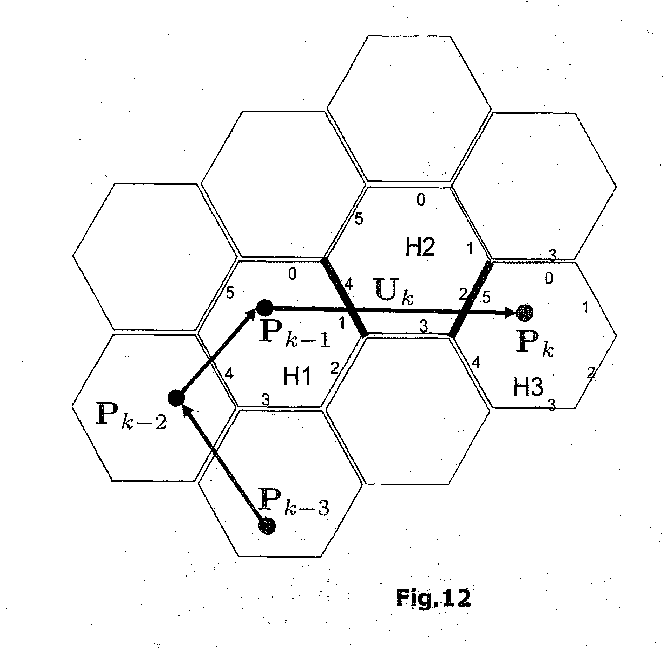

In den Fign. 11 und 12 bezeichnen die Ziffern 0, 1, 2, 3, 4, 5 die Kantennummern jeweils eines Hexagons. Gemäß Fig. 11 wird beim Übergang einer Particle-Position von $P_{k-1}$ nach $P_k$ der Gewichtsberechnung in Komponente (7) der Zähler der Kante 1 des Hexagons H1 hochgezählt sowie optional der Zähler der Kante 4 des Hexagons H2 hochgezählt. Bei der Gewichtsberechnung in Komponente (7) des Particle wird der Zähler der Kante 1 des Hexagons H1 (bezogen auf den Summenzähler des Hexagons H1) verwendet. Gemäß Fig. 12 wird beim Übergang einer Particle-Position von $P_{k-1}$ nach $P_k$ nach der Gewichtsberechnung in Komponente (7) der Zähler der Kante 1 des Hexagons H1 hochgezählt und der Zähler der Kante 2 des Hexagons H2 sowie optional der Zähler der Kante 4 des Hexagons H2 und der Zähler der Kante 5 des Hexagons H3 hochgezählt. Bei der Gewichtsberechnung des Particle wird der Zähler der Kante 1 des Hexagons H1 (bezogen auf den Summenzähler des Hexagons H1) sowie der Zähler der Kante 2 des Hexagons H2 (bezogen auf den Summenzähler des Hexagons H2) verwendet.
Zum Verständnis sei auf Fig. 13 verwiesen, in der ein einzelnes Hexagon einer Hexagon P-Karte, welches die Wahrscheinlichkeiten der möglichen Bewegungen der Person an diesem Ort darstellt, gezeigt ist. In diesem Beispiel ist die Pfeillänge proportional zur Übergangswahrscheinlichkeit über die jeweilige Hexagon-Kante - es ist eher unwahrscheinlich, dass die Person von hinten gesehen nach links oder hinten laufen wird. Typischerweise wird der Hexagon-Radius ca. 0.25 - 1 Meter gewählt.
Die oben erwähnten Terme N(h(j), e(j)), a(h(j), e(j)), N(h(j)), a(h(j)), und Ns werden in diesem Ausführungsbeispiel - für eine Problemstellung in zwei Raumdimensionen - wie folgt bestimmt bzw. verwendet:

- Der 2D Ortsbereich wird in ein regelmäßiges Hexagonraster aufgeteilt (Hexagonradius zum Beispiel 0,5 m).
- Der Index h(0) bestimmt eindeutig die x- und y- Position des Mittelpunktes jenes Hexagons, welches das Particle vom letzten Schritt *verlassen* hat.
- Der Index h(Ns) bestimmt eindeutig die x- und y- Position des Mittelpunktes jenes Hexagons, welches das Particle als Folge des letzten Schrittes *erreicht* hat.
- Alle Hexagone, welche weiterhin passiert werden (wenn überhaupt), werden in aufsteigender Reihenfolge des *Verlassens* mit h(j) indiziert, wobei 0<j<Ns. Zum Beispiel ist in Fig. 12 Ns=3 und in dieser Figur ist h(0) gleich H1, h(1) ist H2 und h(2) ist H3. Für Ns=2 gilt als Beispiel Fig. 10.

- In ähnlicher Weise bezeichnet 0<=e(j)<6 die Kante des Hexagons h(j) über welches es verlassen wurde.
- Die Zahl N(h(j), e(j)) ist die Anzahl aller *vergangenen* Ereignisse (für dieses Particle) bei welchem das Hexagon mit Index h(j) über Kante e(j) verlassen wurde, also wie oft der Pfad dieses Particles die entsprechende Kante überschritten hat. Dieser Term wird als Kantenzähler bezeichnet. N(h(j), e(j)) ist in diesem Falle der Hexagon P-Karten gleichzeitig die Repräsentation einer die Bewegung beeinflussenden Umgebung wie eingangs beschrieben. Sie wird wie unten erläutert zur Karte umgerechnet.
- Die Zahl N(h(j)) ist der Summenzähler des Hexagons und bezeichnet die Summe von N(h(j), e) für e=0 bis 5.
- Die Zahl a(h(j), e(j)) ist eine im Prinzip beliebig wählbare positive Zahl welche als "a-priori" Zähler interpretiert werden kann (englisch, aus der Bayes'schen Schätztheorie bekannt: "virtual counts") und Vorwissen über die Passierbarkeit dieses Hexagons über diese Kante enthält.
- So ist auch a(h(j)) die Summe von a(h(j), e) für e=0 bis 5. Man kann z.B. für a(h(j), e(j)) grundsätzlich einen Wert von ca. 1 ansetzen.

Vorteilhafterweise inkrementiert man N(h(j), e(j)) für ein Particle nicht nur für das *verlassene* Polygon (z.B. Hexagon), sondern man tut so, als hätte man ebenfalls den Übergang in umgekehrter Reihenfolge getan und inkrementiert auch noch die entsprechende Kante des *erreichten* Polygons (wie in den Beispielen aus Fig. 11 und 12 gezeigt). Vorteilhafterweise korrigiert man den Bruch im Term für die Gewichtsberechnung um geometrische Ungleichheiten des Polygon-Gitters, da je nach Durchtrittsrichtung des betreffenden Particle beispielsweise durch ein Hexagongitter für eine fixe und gerade Weglänge, leicht unterschiedlich viele Kanten durchschritten werden, was sonst zu einer falschen Bevorzugung mancher Richtungen und somit mancher Particle führt, da der Bruch in der Formel für die Gewichtsberechnung immer kleiner als 1 ist. Vorteilhafterweise korrigiert man den Bruch im Term für die Gewichtsberechnung um unterschiedliche Längen des aktuellen Schrittvektors eines Particle, da sonst Particle, welche aus Zufall eher kürzere Schritte repräsentieren, dadurch fälschlicherweise bevorzugt würden, da der Bruch in der Formel für die Gewichtsberechnung immer kleiner als 1 ist. Dies kann beispielhaft dadurch geschehen, dass der Bruch potenziert um eine Zahl z genommen wird, wobei z die Längen- und/oder Richtungskorrektur umfasst (z.B. lineare Normierung auf die Anzahl der Hexagonübergänge bezogen auf einen Meter Weglänge und bezogen auf eine einheitliche Richtung im Hexagonraster).

Die Bestimmung der Karte selbst geschieht in der Komponente 13b der Fign. 4 und 6 nach Abschluss eines Laufes durch Auswertung der in der Zustandsvariablen gespeicherten ,Repräsentation einer die Bewegung beeinflussende Umgebung (P-Karte oder Karte M, im Folgenden zur Vereinfachung als Karte bezeichnet) eines jeden Particle, im obigen Beispiel z.B. die Zahl N(h, e) oder auch der Bruch (N(h, e)+a(h, e)) / (N(h) + a(h)) für alle Hexagone h und alle Kanten e. Entweder nimmt man die Karte des Particle mit dem größten Gewicht, oder die über alle Particle gewichtet gemittelte Karte oder andere Verfahren, welche in der Particle-Literatur bekannt sind. Bei der gewichteten Mittelung können zum Beispiel die Übergangszähler gewichtet gemittelt werden. Die Karte kann in einer solchen Form direkt bei der Positionierung eines Fußgängers zu einem späteren Zeitpunkt verwendet werden - sie ersetzt im obigen Beispiel dauerhaft oder als "a-priori" Zähler die entsprechenden Werte bei der später durchgeführten Positionierung mit oder ohne Neuberechnung der Karte. Die Karte kann aber auch weiterverarbeitet werden (durch Anwendung beliebiger weiterer Funktionen), z.B. durch Anwendung von Ortsbereichsfiltern oder Kantenerkennungsalgorithmen, um eine graphische Repräsentation der Karte bzw. der Umgebung zu erlangen. Im obigen Ausführungsbeispiel können die aus den Particlen berechneten (gemittelt gewichteten) Kantenübergangszähler verwendet werden, um Wände und Hindernisse zu erkennen (Kanten ohne oder mit nur sehr wenigen Übergängen). Dabei können nichtlineare Funktionen wie z.B. harte Begrenzung, Sigmoid-Funktionen oder Schwellwerte verwendet werden, um unterschiedliche Werte der Kantenübergangszähler unterschiedlich und nichtlinear in die Karte einfließen zu lassen.

Vorteile der Erfindung

Das so beschriebene Verfahren hat die Eigenschaft, dass solche Particle belohnt werden, welche gemäß ihrer Odometrie-Fehler- und Schritthypothesen öfters wieder dieselben Kantenübergänge der Hexagone aufsuchen. Dies tut auch ein Mensch, wenn er sich in einer durch Wände beschränkten Umgebung bewegt: an Türen, in Fluren, an Kreuzungen und bei ähnlichen Hindernissen bzw. Wegmöglichkeiten wählt der Fußgänger einen der physikalisch möglichen Übergänge aus - er läuft nicht durch Wände hindurch. Wenn ein Fußgänger also wiederholt dieselben Gebiete (also z.B. obige Hexagone) aufsucht, dann werden solche Particle (Hypothesen) bevorzugt, welche ebenfalls dieselben Bewegungsmuster repräsentieren. Nach einer Zeit "überleben" nur solche Particle, welche die wirkliche Bewegungshistorie des Fußgängers mehr oder weniger korrekt abbilden - und somit die Karte. Dies ermöglicht es also einer Person, zum Beispiel in ein Gebäude einzutreten - mit zuletzt bekannter Position durch Satellitennavigation (z.B. GPS) und dann im Gebäude eine Karte aufzubauen, unter der Voraussetzung, dass hinreichend oft (in der Praxis reicht oftmals 1 weiteres Mal) eine Region erneut aufgesucht wird. Die Drift neuerer Sensoren ist derzeit so gut, dass oftmals für einige Minuten auf wenige Meter genau positioniert werden kann, ohne dass der Fußgänger erneut Gebiete betreten hat. In dieser Zeit ist es sehr wahrscheinlich, dass z.B. eine Wegstrecke in umgekehrter Richtung gegangen wurde, oder eine Flurecke mehrmals gleichartig betreten wurde.

Ferner ist das Verfahren in der Lage, nicht nur Wände zu erkennen und zu lernen, sondern auch solche Einflusse wie Möbel, Trennwände, und andere Hindernisse. Somit ergibt sich eine engere Bindung der Bewegung des Menschen an die Umgebung, was die Positionierungsgenauigkeit erhöht. Ferner kann das Verfahren auch Änderungen der Umgebung erfassen, wie z.B. Änderungen von Innen- und Außenwänden, Umstellung größerer Möbel, neue Trennwände, usw.

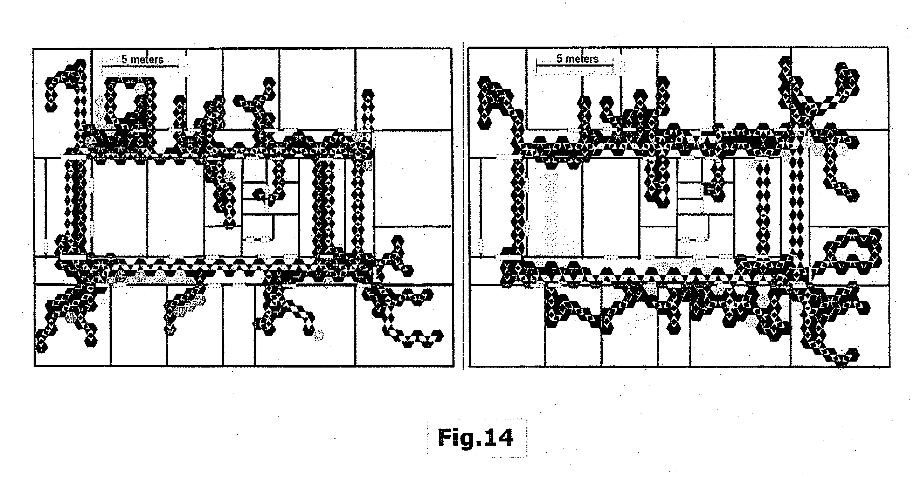

In Fig. 14 sind zwei Beispiele von erzeugten Hexagon P-Karten für jeweils unabhängige Läufe eines Menschen in einem Gebäude während jeweils ca. 10 Minuten dargestellt. Während dieser Zeit hat die Person den innenliegenden, umlaufenden Flur ein paar Mal durchlaufen sowie einige der Räume betreten. Verfahren: In diesem Beispiel war es ein Rao Blackwellisiertes Particle-Filter mit ca. 30000 Particles.

Hintergrundumriss: Tatsächlicher Flurplan - hier nur als Vergleich.

Schwarze Hexagone: Die P-Karte, welche vom Verfahren als die wahrscheinlichste errechnet wurde. Diese P-Karte ist also die P-Karte im Zustand des Particles, welches insgesamt das beste kumulative Gewicht bekommen hat.

Weniger schwarze (graue) Hexagone: Hexagone welche zu etwas weniger wahrscheinlichen, aber dennoch nicht unwahrscheinlichen P-Karten gehören.

Je größer die Löcher in den Hexagonen sind, desto häufiger wurde dieses Hexagon vom besten Particle "besucht".

Weiße Bereiche: Diese wurden durch das beste Particle nicht besucht.

Erweiterungen

In der Praxis wird man dieses Verfahren auch mit Daten weiterer Sensoren verbinden, was dessen Zuverlässigkeit weiter erhöhen wird: z.B. Satellitennavigation, Magnetkompass, WLAN Messungen zur Positionierung, Mobilfunkpositionsmessungen, UWB Messungen zur Positionierung (z.B. in Komponente (3) der Fign. 4 und 6). Ebenso wird man bekannte Teilbereich des Gebäudeplans verwenden, um die Particle-Bewegung zu beschränken-z.B. die Außenwände.

Eine weitere Möglichkeit, dieses Verfahren zu verbessern, ist die Verwendung von reellen oder virtuellen Referenzmarken. Eine Referenzmarke ist in dem Zusammenhang dieser Erfindung ein Merkmal der Umgebung, die ein Mensch wiedererkennen kann (z.B. eine bestimmte Tür, eine Ecke eines bestimmten Raums, etc.). Bei einer virtuellen Referenzmarke muss der Ort (im Koordinatensystem des Systems) dieser Referenzmarke nicht bekannt sein.

Das System verwendet diese virtuellen Referenzmarken in folgender Weise: Wenn eine Person zum ersten Mal einer neuen geeigneten Referenzmarke begegnet, dann gibt die Person in einer geeigneten Art und Weise ein Signal an das System. Das kann zum Beispiel so geschehen, dass die Person an einem tragbaren Endgerät (z.B. Mobiltelefon) eine bestimmte Nummer eingibt oder einen bestimmten Knopf drückt. Oder aber die Person bewegt auf einer bestimmten Art und Weise den Fuß auf dem die Sensoren angebracht sind (z B. zweimal leicht gegen den Boden treten, was aus den Sensordaten vom System leicht zu erkennen ist). Die Referenzmarke kann die Person selbst wählen, bzw. sie kann sich entscheiden, an welchen Orten sie eine solche Referenzmarke setzen möchte. Oder aber eine Referenzmarke ist bereits als solche physisch markiert oder dem Fußgänger so beschrieben, dass sie erkennbar ist.

Das Particle-Filter weist nun jedem Particle für diese neue Referenzmarke eine weitere Zustandsvariable zu, bestehend aus diesen Informationen: dem aktuellen Ort des Particle (kopiert aus dessen Zustandsvariable) und dazugehörend optional eine Repräsentation der Ortsgenauigkeit (z.B. Varianzen, Wahrscheinlichkeitsdichtefunktion) sowie eine Identifikationsnummer. Falls nur eine virtuelle Referenzmarke erlaubt ist oder wenn die explizite Identifikation der Referenzmarke beispielsweise aus der Namensgebung in einer Software-Realisierung hervorgeht, muss keine Identifikationsnummer gespeichert werden. Trifft nun der Fußgänger im weiteren Verlauf erneut auf diese virtuelle Referenzmarke, so wird er erneut dasselbe Signal geben (z.B. dasselbe Bewegungsmuster mit den Füßen oder denselben Knopf/Nummernknopf drücken). Nun werden im obigen Beispiel im "weight update" Schritt die Gewichte mit einem weiteren multiplikativen Faktor bewertet. Dieser Faktor ist eine Funktion (genannt F1) der aktuellen Ortskoordinate des Particle und der gespeicherten Position der Referenzmarke und dessen bisher bestimmter Ortsgenauigkeit, Diese Funktion kann beliebig gewählt werden, wird aber vorteilhafter so gewählt, dass der Faktor umso größer wird, je näher die beiden Koordinaten zueinander liegen und je höher die aktuelle Ortsgenauigkeit der Referenzmarke ist. Ferner wird die für jedes Particle gespeicherte Position der Referenzmarke und dessen bisher bestimmte Ortsgenaulgkeit neu berechnet, indem zum Beispiel die Position aus dem Mittelwert aller beobachteten Positionen genommen wird und die Ortsgenauigkeit die Variation der beobachteten Positionen repräsentiert (z.B. die Varianz; es kann hierzu auch ein Kalman Filter verwendet werden).

Gibt der Fußgänger kein Signal, so werden trotzdem alle Particle mit Nlv weiteren multiplikativen Faktoren im "weight update" Schritt gewichtet. Hierbei ist Nlv die Anzahl der bisher festgelegten virtuellen Referenzmarken. Diese Faktoren berechnen sich jeweils wie folgt: sie ist ebenso eine Funktion (genannt F2) der aktuellen Ortskoordinate des Particle und der gespeicherten Position und dessen bisher bestimmter Ortsgenauigkeit. Diese Funktion F2 kann beliebig gewählt werden, wird aber vorteilhaft so gewählt, dass der Faktor umso kleiner wird, je näher die beiden Koordinaten zueinander liegen und je höher die aktuelle Ortsgenauigkeit der Referenzmarke ist. Wenn eine Referenzmarke beobachtet wird, dann besteht optional der "weight update" Schritt nicht nur aus einem multiplikativen Faktor bezogen auf diese Referenzmarke, sondern aus diesem Faktor multipliziert mit (Nlv-1) weiteren Faktoren bezogen auf alle (Nlv-1) jetzt unbeobachteten Referenzmarken, so wie beschrieben. Die Form der beiden genannten Funktionen trägt auch der Tatsache Rechnung, dass Fußgänger es insbesondere vergessen, eine Referenzmarke anzumerken, und es auch (seltener) vorkommen kann, dass ein Fußgänger eine Referenzmarke anmerkt, obwohl er nicht in dessen Nähe ist. Das Anpassen der beiden Funktionen F1 und F2 an diese Fehlerquellen geschieht in geeigneter Weise dadurch, dass deren Werte nicht zu klein werden, wenn die jeweils eingehenden Positionen weiter entfernt sind (bei der Funktion F1) bzw. näher sind (bei F2). In ähnlicher Weise können F1 und F2 so angepasst werden, dass Referenzmarken auch in größerer Umgebung vom Fußgänger angemerkt werden, indem sie im mathematischen Sinne weniger diskriminierend ("scharf") bezüglich der Positionsunterschiede sind.

Im Gegensatz zu den ebenso beschriebenen virtuellen Referenzmarken werden reelle Referenzmarken ähnlich betrachtet und im System verarbeitet. Die Unterschiede sind die, dass die Positionen dieser echten Referenzmarken dem System bekannt sein müssen. Somit entfällt der Schritt der Neuberechnung der Position der Referenzmarke. Ferner arbeitet das System auch von Beginn an mit den Nlr reellen Referenzmarken und es muss nicht gewartet werden, bis sich diese Zahl durch Markieren der Referenzmarken erreicht wird. Natürlich können bei diesem Verfahren reelle und virtuell Referenzmarken verbunden werden: alle entsprechende Faktoren gehen im gewählten obigen Beispiel multiplikativ in die Gewichtsberechnung ein.

Das Verfahren lässt sich auch in geeigneter Art und Weise mit aus der Robotik bekannten optischen SLAM Verfahren verbinden, indem die visuellen "Features", welche mit den optischen Sensoren (siehe Komponente (3) in den Fign. 4 und 6) vermessen werden, ebenso als beitragende Faktoren in der Gewichtsberechnung und/oder "importance sampling" Schritt der Particle eingehen - z.B. als multiplikativer Term in dem Gewicht. Ebenso trägt jedes Particle nun auch den Zustand jedes beobachteten visuellen Features und passt dessen Ort und Lage im Raum sowie dessen Genauigkeit der aktuellen Beobachtung und der restlichen Zustände des Particle an. Es können auch in derselben Art und Weise Features von Ultraschall oder Infrarot oder Mikrowellen Sensorsystemen verwendet werden. Diese "Features" können somit als Teil der erstellten Karte aufgefasst und verwendet werden und/oder die hier beschrieben Erweiterung verbessert die Erstellung der Karte auf Basis der Odometrie.

Das Verfahren lässt sich auch in geeigneter Art und Weise mit magnetischen Sensoren verbinden, indem die jeweilige Stärke und Richtung des örtlichen Magnetfeldes als Feature aufgenommen wird und entsprechend den eben beschriebenen visuellen Features im System eingehen. Das Magnetfeld wird in diesem Fall mit geeigneten elektronischen Magnetfeldsensoren gemessen.

Das Verfahren lässt sich auch in geeigneter Art und Weise verbessern, indem an beiden Füßen Sensoren für die Odometrie verwendet werden (also zwei Ausführungen von Komponente (1) vorhanden sind). Ebenso sind mehrere Sensoren an einem Fuß einsetzbar, um die Drift zu reduzieren. Durch geeignete Verbindung der Sensordaten (z.B. Mittelung der Odometrie-Ergebnisse oder Mittelung der Rohdaten der Sensoren) lässt sich eine verbesserte Odometrie gewinnen.

Das Verfahren lässt sich auch in geeigneter Art und Weise verbessern und/oder vereinfachen, indem Sensoren für die Odometrie (Komponente (3) in den Fign. 4 und 6) an anderen Körperstellen angebracht werden und aus der Pedestrian Dead Reckoning bekannte Verfahren zur Berechnung bzw. Verbesserung der Odometrie angewendet werden (in Komponente (4) der Fign. 4 und 6). Ebenso kann das Verfahren nur mittels solcher Odometrie durch Schrittdetektion und Schrittlängen-/Winkel-Schätzung betrieben werden - ohne am Schuh montierte Sensoren (also ist Komponente (1) der Fign. 4 und 6 in diesem Fall optional).

Das Verfahren lässt sich auch in geeigneter Art und Weise vereinfachen, indem bei der Verwendung von Polygon oder Hexagon P-Karten die Zähler nur für eine Kante zwischen zwei Polygonen oder Hexagonen aktualisiert und gespeichert werden, und nicht für alle Kanten aller Hexagone einzeln. Somit lässt sich der Speicherbedarf deutlich reduzieren.

Das Verfahren lässt sich auch in geeigneter Art und Weise verbessern und/oder vereinfachten, indem die aus der Robotik bekannte visuelle Odometrie angewendet wird (z.B. "Lucas-Kanide" oder "Focus of Expansion" Verfahren). Hierbei wird mittels optischer Sensoren (z.B. Kamera (Komponente (3) in den Fign. 4 und 6) die Veränderung der Erscheinung der Umgebung verwendet um die Ortsänderung und Lageänderung der Person zu schätzen.

Das Verfahren lässt sich auch in geeigneter Art und Weise unter Verwendung der Polygon-Repräsentation (Polygon P-Karten) verbessern, indem das Polygonraster an die Umgebung angepasst wird, um unterschiedlich dicht aufgebaut zu sein. Die Polygone können sich auch überlappen. Ebenfalls können mehrere Polygonebenen hierarchisch eingesetzt werden und die Übergangszähler für jede Ebene getrennt berechnet werden. Ebenso gehen dann in der Gewichtsberechnung der Particle alle Ebenen ein (z.B. multiplikativ im Gewicht).

Als Karte werden dann beispielsweise alle so erstellten Ebenen ausgegeben.

Das Verfahren lässt sich auch in geeigneter Art und Weise umsetzen, indem bei der Verwendung von Hexagon P-Karten statt eines Hexagon-Rasters andere Raster (z.B. Rechtecke, Dreiecke, andere Polygone) eingesetzt werden. Diese können überlappend oder nicht-überlappend und / oder regelmäßig oder unregelmäßig sein und / oder in mehreren Ebenen aufgebaut sein. Analog zum Umsetzung mit Hexagonen werden die Winkelbereichsübergänge gezählt und in die Gewichtsberechnung aufgenommen.

Das Verfahren lässt sich auch in geeigneter Art und Weise umsetzen, indem bei der Verwendung von Hexagon P-Karten statt eines Hexagon-Rasters oder eines anderen Polygonraster eine regelmäßige oder unregelmäßige Anordnung von Kreisen oder Ovalen verwendet wird. Hierbei wird kein Kantenubergang gezählt, sondern es wird der Winkel, über den bei einem Schritt oder Teil des Schrittes der Kreis verlassen wurde, erfasst. Für diesen Winkel (in geeigneter beliebiger Quantisierung, d.h. Wertebereichs-Aufteilung) wird nun der Winkelbereichsubergangszähler ausgewertet und aktualisiert (analog zu den Kantenzählern bei den Hexagonen im Ausführungsbeispiel). Bei einem überlappenden Kreismuster würde man stets den Kreis selektieren, dessen Mittelpunkt am nächsten zum Particle liegt. Analog zum Umsetzung mit Hexagonen werden die Kantenübergänge gezählt und in die Gewichtsberechnung aufgenommen.

Das Verfahren lässt sich auch in geeigneter Art und Weise verbessern, indem nicht nur die Zähler für Kantenübergänge bzw. Winkelbereichsübergänge pro Hexagon oder anderer Strukturen gezählt und ausgewertet werden, sondern für jede Kombination beliebig vieler vorheriger Übergänge. Wenn Nm solcher vorheriger Übergänge berücksichtigt werden, dann spricht man von einem Markov-Prozess Nm-ter Ordnung, und es können die in der Fachwelt bekannten Verfahren zur Berechnung des Markov-Prozesses angewendet werden, wie z.B. die Repräsentation der Markov-Kette als sog. gerichtetes Bayesian Network (welches zur Vereinfachung nur Knoten-Ubergänge von jedem Zustandsknoten der Markov-Kette (also z.B. die Kantenubergänge des entsprechend zurückliegenden Hexagons bei Hexagon P-Karten) zum Knoten der Kantenubergänge des aktuellen Hexagons) aufweisen muss, und dem Erlernen dessen Wahrscheinlichkeitstabellen gemäß dem bekannten Bayes'schem Lernen aus Daten bei bekannter Netzwerk-Struktur. Die Berechnung des Integrals aus Fig. 8 ist auch in diesem Fall vorher analytisch lösbar und entspricht der Lösung eines Bayesian Networks mit einem Zielknoten und Nm unabhängigen Elternknoten.

Das Verfahren lässt sich auch in geeigneter Art und Weise verbessern, indem bei der Kartenerstellung bereits erstellte Karten von anderen Nutzern verwendet werden. So können beispielsweise die "a-priori" Zähler auf bereits gemessene Übergangszähler gesetzt werden.

Das Verfahren lässt sich auch in geeigneter Art und Weise dadurch erweitern, dass die gemessenen Sensorwerte (inklusive der möglicherweise weiter verwendeten Daten anderer Sensoren wie Satellitennavigation, Kompass, etc.) von mehreren Läufen in derselben Umgebung oder in uberlappenden Umgebungen bei der Kartenerstellung verknüpft werden. Diese Datensätze können vom selben Läufer aufgenommen werden oder von unterschiedlichen Personen. So wäre es möglich, dass kundige Personen - z.B. in einem Gebäude arbeitende Mitarbeiter eines Unternehmens - eine Zeit lang Sensordaten während ihres Alltages oder bei speziellen Messläufen aufnehmen. Diese Daten können währenddessen oder anschließend elektronisch an eine Recheneinheit (z.B. Server) übertragen werden, und diese Recheneinheit kann daraus eine Karte erstellen. Als Erweiterung hiervon können neu gewonnen Karten bzw. Messungen von bestimmten Gebieten mit bestehenden oder parallel dazu aufgenommenen Karten/Messungen (teil-) überlappender Gebiete verknüpft werden. Diese Verknüpfung lässt sich beispielhaft auf verschiedenen Wegen umsetzen:

1. Durch Verbindung der individuellen Karten, nachdem jede Karte für jeden Lauf erstellt wurde. Die Verbindung lässt sich bei überlappenden Gebieten durch Erkennen von gemeinsamen geometrischen Merkmalen in den Karten durchführen, z.B. mittels Kreuz-Korrelation der Übergangswahrscheinlichkeiten im Suchraum von verschiedenen Rotations-, Translations- und Skalierungstransformationen einer der Karten. Die Karten werden hierbei unter Berücksichtigung, der Transformation mit der größten Korrelation kombiniert (z.B. Addition der Kantenzähler). Bei der Kombination muss berücksichtigt werden, dass bei einer Rotation die Kanten der Hexagone (oder anderer Polygone) der Karten gegeneinander verdreht sind. Dieser Winkel muss kein Vielfaches vom Polygongrundwinkel sein (z.B. 60° beim Hexagon). In diesem Fall kann bei der Kombination zwischen den benachbarten beitragenden Kantenwerten interpoliert werden. Ähnlich kann bei einer Skalierung oder Translation vorgegangen werden, wenn nach diesen Transformationen die Hexagon-Raster nicht übereinander passen - auch hier können die beitragenden Kanten gewichtet gemittelt zusammengeführt werden.

2. Wie eben beschrieben - aber nach einer Zusammenführung von neuen mit bestehenden Karten, wird die entstandene Karte als "a-priori" Zähler für eine erneute Durchführung des SLAM Algorithmus auf die einzelnen Datensätze verwendet. Die dabei entstehenden einzelnen Karten werden dann wieder zusammengeführt. Dieser Prozess kann iterativ für alle oder einzelne beitragende Datensätze wiederholt werden. Bei der Verwendung der "a-priori" Zähler bei der erneuten Berechnung einer Karte aus einem Datensatz X kann das Verfahren dadurch verbessert werden, dass die Zähler aus der Karte, die aus dem Datensatz X in die gemeinsame Karte geflossen waren, aus dieser Karte abgezogen werden, aber nur für die erneute Verarbeitung des Datensatzes X. Dieses zuletzt genannte Prinzip entspricht der bekannten Berücksichtigung von "extrinsischen" und "intrinsischen" Informationen bei der iterativen Dekodierung von Turbo-Codes, weiche für die Fehlerkorrektur in der Nachrichtentechnik verwendet werden.

3. Wie eben beschrieben aber mit der Erweiterung, dass bei der Kombination der Zählerwerte keine einfache Addition der Werte aus neuer und bestehender Karte vorgenommen wird, sondern eine beliebige lineare oder nichtlineare Funktion der beitragenden Werte (z.B. gewichtete Addition, Kompression der beitragenden Werte, Kompression des Ergebnisses einer Addition, Anwendung von Schwellenwerten auf die beitragenden Werte oder auf das Ergebnis).

Wie bei der Zusammenführung von Karten beschrieben, kann die errechnete Karte einer beliebigen linearen oder nichtlinearen Funktion unterzogen werden (z.B. Kompression der Zählerwerte oder Wahrscheinlichkeiten, Abwendung von Schwellenwerten).

Eine weitere, noch detailliertere Beschreibung der Erfindung findet sich in den nachfolgend aufgelisteten Artikeln.

Konferenz GNSS-ION: "Inertial Systems Based Joint Mapping and Positioning for Pedestrian Navigation", Patrick Robertson, Michael Angermann, Bernhard Krach, Mohammed Khider; Sept. 22-25 2009, Savannah, Georgia, USA.

Konferenz UbiComp 2009: "Simultaneous Localization and Mapping for Pedestrians using only Foot-Mounted Inertial Sensors", Patrick Robertson, Michael Angermann, Bernhard Krach, September 30 - October 3, 2009, Orlando, Florida, USA.

Robertson, Patrick; Angermann, Michael; Krach, Bernhard and Khider, Mohammed: SLAM Dance: Inertial-Based Joint Mapping and Positioning for Pedestrian Navigation, InsideGNSS, May 2010 (www.insidegnss.com).

## Patentansprüche

1. Verfahren zur Erstellung einer Karte bezüglich ortsbezogener Angaben über die Wahrscheinlichkeit der zukünftigen Bewegung einer Person in einem räumlichen Umfeld, wie z.B. Gebäude, Wald, Tunnelsystem, öffentlicher Platz wie insbesondere Einkaufszentrum, Flughafen, Bahnhof, wobei bei dem Verfahren

   - mindestens eine Person einen oder mehrere Sensoren für odometrische Messungen mitführt, wobei die odometrischen Messungen auf Grund von inhärenten Messungenauigkeiten des/der Sensors/Sensoren fehlerbehaftet sind,
   - sich die mindestens eine Person zu Fuß durch das räumliche Umfeld bewegt,
   - aus den Messsignalen des/der Sensors/Sensoren Informationen über die Schrittlängen und/oder Schrittrichtung und/oder Orientierung des Sensors oder der Person ermittelt werden und
   - anhand dieser Informationen eine Karte erstellt wird, und zwar unter Verwendung eines Bayes'schen Schätzers, dessen Zustandsvariablen-Raum eine Hypothese über sowohl den aktuellen Schritt einer Person und Fehler der odometrischen Messungen als auch die ortsbezogenen Angaben über die Wahrscheinlichkeiten der zukünftigen Bewegung einer Person beinhaltet.

2. Verfahren nach Anspruch 1, **dadurch gekennzeichnet, dass** als Bayes'scher Schätzer ein Hypothesen- oder Particle-Filter und/oder ein Rao-Blackwellisiertes Particle-Filter und/oder ein Kalman-Filter und/oder ein Monte-Carlo-Hypothesen-Filter oder Mischformen solcher Filter verwendet wird.

3. Verfahren nach Anspruch 1 oder 2, **dadurch gekennzeichnet, dass** der Schritt der Person die Schrittlänge und optional auch die Bewegungsrichtungsänderung der Person umfasst.

4. Verfahren nach einem der Ansprüche 1 bis 3, **dadurch gekennzeichnet, dass** der Fehler einer odometrischen Messung einen Driftparameter bezogen auf die ermittelte Schrittlängen und/oder Schrittrichtung und/oder Orientierung des Sensors oder der Person betrifft.

5. Verfahren nach einem der Ansprüche 1 bis 4, **dadurch gekennzeichnet, dass** die Karte während der Bewegung der Person durch das Umfeld oder nach einer Speicherung der Sensor-Messsignale oder der ermittelten Informationen über die Schrittlängen und/oder Schrittrichtung und/oder Orientierung des Sensors oder der Person zeitverzögert erstellt wird.

6.  Verfahren nach einem der Ansprüche 1 bis 5, **dadurch gekennzeichnet, dass** die Berechnungen zur Erstellung der Karte entweder auf einem mitgetragenen Endgerät oder auf einem Server durchgeführt werden.

7.  Verfahren nach einem der Ansprüche 1 bis 6, **dadurch gekennzeichnet, dass** die erstellte Karte entweder zur Positionierung oder Wegführung der Person oder zur verbesserten Positionierung oder Wegführung anderer Personen verwendet wird.

8.  Verfahren nach einem der Ansprüche 1 bis 7, **dadurch gekennzeichnet, dass** zur Verbesserung der Informationen über die Schrittlängen und/oder Schrittrichtung und/oder Orientierung des Sensors oder der Person Messsignale/-daten weiterer Sensoren herangezogen werden und/oder dass Teilbereiche eines Plans des Umfeldes verwendet werden, um den Zustandsraum des Bayes'schen Schätzers zu beschränken.

9.  Verfahren nach Anspruch 8, **dadurch gekennzeichnet, dass** als weitere Sensoren solche zur Positionierung durch Satellitennavigation und/oder einen Magnetkompass und/oder WLAN-Messungen, und/oder Mobilfunkpositionsmessungen und/oder UWB Messungen verwendet werden.

10. Verfahren nach einem der Ansprüche 1 bis 9, **dadurch gekennzeichnet, dass** reelle oder virtuelle Referenzmarken verwendet werden, welche durch die Person erkannt werden können und deren Vorhandensein und ggf. auch deren Position als weitere Parameter in den Zustandsraum des Bayes'schen Schätzers aufgenommen werden.

11. Verfahren nach Anspruch 10, **dadurch gekennzeichnet, dass** die Aufnahme der Position der Referenzmarken durch eine in örtlicher Nähe der Person befindliche Mensch-Maschine-Schnittstelle und/oder einen Knopf und/oder einen Taster und/oder eine Spracheingabe erfolgt.

12. Verfahren nach einem der Ansprüche 1 bis 11, **dadurch gekennzeichnet, dass** das Verfahren mit aus der Robotik bekannten optischen SLAM Verfahren kombiniert wird, indem die visuellen Merkmale, welche mit optischen Sensoren vermessen werden, in die Bestimmung des Zustandsraums des Bayes'schen Schätzers eingehen.

13. Verfahren nach Anspruch 12, **dadurch gekennzeichnet, dass** die visuellen Merkmale in die Bestimmung des Zustandsraums des Bayes'schen Schätzers eingehen als beitragende Faktoren in die Gewichtsberechnung und/oder in einen "importance sampling" Schritt der Particle oder als multiplikativer Term in das Gewicht, wobei jedes Particle nun auch den Zustand jedes beobachteten visuellen Features trägt und dessen Ort und Lage im Raum sowie dessen Genauigkeit der aktuellen Beobachtung der Features und der restlichen Zustände des Particle anpasst und wobei ferner in derselben Art und Weise auch Features von Ultraschall oder Infrarot- oder Mikrowellen Sensorsystemen verwendet werden können, die somit als Teil der erstellten Karte aufgefasst und verwendet werden und/oder die Erstellung der Karte auf Basis der odometrischen Messungen verbessern.

14. Verfahren nach einem der Ansprüche 1 bis 13, **dadurch gekennzeichnet, dass** magnetische Sensoren verwendet werden, indem die jeweilige Stärke und Richtung des örtlichen Magnetfeldes als Feature aufgenommen wird und entsprechend einem visuellen Merkmal in die Berechnungen eingehen.

15. Verfahren nach einem der Ansprüche 1 bis 14, **dadurch gekennzeichnet, dass** die Person mit mehreren Sensoren versehen ist, um Fehler bei einer odometrischen Messung zu reduzieren, wobei sich durch Kombination der Messigriale der mehreren Sensoren verbesserte odometrische Messungen gewinnen lassen.

16. Verfahren nach Anspruch 15, **dadurch gekennzeichnet, dass** die Kombination der Messignale der Sensoren eine Mittelung der Informationen über die Schrittlängen und/oder Schrittrichtung und/oder Orientierung des Sensors oder der Person oder eine Mittelung der Rohdaten der Sensoren ist.

17. Verfahren nach einem der Ansprüche 1 bis 16, **dadurch gekennzeichnet, dass** der oder die Sensoren für die odometrischen Messungen an einem Fuß oder Schuh der mindestens einen Person oder an einer anderen Körperstelle angebracht werden.

18. Verfahren nach einem der Ansprüche 1 bis 17, **dadurch gekennzeichnet, dass** als Darstellung der Wahrscheinlichkeitsdichtefunktion des Bayes'schen Schätzers folgendes mathematisches Produkt gewählt wird: die bedingte Wahrscheinlichkeitsdichte der Fehler der aktuellen odometrischen Messung konditioniert auf die Fehler der odometrischen Messung im letzten Zeitschritt, multipliziert mit der bedingten Wahrscheinlichkeitsdichte des aktuellen Schrittvektors konditioniert auf die aktuellen Informationen über die Schrittlänge und/oder Schrittrichtung und/oder Orientierung des Sensors oder der Person und der aktuellen Driftparameter.

19. Verfahren nach einem der Ansprüche 1 bis 18, **dadurch gekennzeichnet, dass** als Karte bezüglich ortsbezogener Angaben über die Wahrscheinlichkeit der zukünftigen Bewegung einer Person in einem räumlichen Umfeld Angaben über Übergangswahrscheinlichkeiten über Kanten von räumlich angeordneten Polygonen verwendet werden, wobei bei Umsetzung mittels eines Particle-Filters die Kantenübergänge des Particles bei jedem Polygonübergang für dieses Particle gezählt und in eine Gewichtsberechnung aufgenommen werden.

20. Verfahren nach Anspruch 19, **dadurch gekennzeichnet, dass** bei der Verwendung von Polygonen die Zähler nur für eine Kante zwischen zwei benachbarten Polygonen aktualisiert und gespeichert werden, und nicht für alle Kanten aller Polygone einzeln, wodurch sich der Speicherbedarf deutlich reduzieren lässt.

21. Verfahren nach einem der Ansprüche 1 bis 20, **dadurch gekennzeichnet, dass** aus der Robotik bekannte visuelle odometrische Messungen angewendet werden, wobei mittels optischer Sensoren die Veränderung der Erscheinung der Umgebung erfasst wird, um die Ortsänderung und Lageänderung der Person zu schätzen.

22. Verfahren nach einem der Ansprüche 1 bis 21, unter Verwendung von Polygon-Repräsentationen der Karte, wobei das Polygonraster an die Umgebung angepasst wird, um unterschiedlich dicht aufgebaut zu sein, wobei sich die Polygone überlappen können und/oder mehrere Polygonebenen hierarchisch eingesetzt werden und die Übergangszähler für jede Ebene getrennt berechnet werden und wobei in der Gewichtsberechnung der Hypothesen eines Particle-Filters alle Ebenen eingehen.

23. Verfahren nach einem der Ansprüche 1 bis 22, **dadurch gekennzeichnet, dass** bei der Verwendung von Polygonen für die Karte die Polygone überlappend oder nicht-überlappend und/oder regelmäßig oder unregelmäßig sind und/oder in mehreren Ebenen aufgebaut sind.

24. Verfahren nach einem der Ansprüche 1 bis 23, **dadurch gekennzeichnet, dass** bei der Verwendung von Polygonen für die Karte statt eines Polygonrasters eine regelmäßige oder unregelmäßige Anordnung von Kreisen oder Ovalen oder anderer geometrischer Formen verwendet wird, wobei anstelle des Zählens eines Kantenübergangs der Winkel über den bei einem Schritt oder Teil des Schrittes die Form verlassen wird, erfasst wird und für diesen Winkel ein Winkelbereichsübergangszähler ausgewertet und aktualisiert wird, wobei bei einem überlappenden Formmuster stets diejenige Form selektiert wird, deren Mittelpunkt am nächsten zum Particle liegt und analog zur Umsetzung mit Hexagonen die Winkelbereichsübergänge gezählt und in die Gewichtsberechnung aufgenommen werden.

25. Verfahren nach einem der Ansprüche 1 bis 24, **dadurch gekennzeichnet, dass** nicht nur die Zähler für Kantenübergänge oder Winkelbereichsübergänge pro Hexagon oder anderer Strukturen gezählt und ausgewertet werden, sondern für jede Kombination beliebig vieler vorheriger Übergänge.

26. Verfahren nach einem der Ansprüche 1 bis 25, **dadurch gekennzeichnet, dass** bei der Kartenerstellung bereits erstellte Karten von anderen Nutzern oder anderen Läufen einer Person verwendet werden.

27. Verfahren nach Anspruch 26, **dadurch gekennzeichnet, dass** bei der Kartenerstellung bereits erstellte Karten von anderen Nutzern oder anderen Läufen einer Person verwendet werden, indem die "a-priori" Zähler für Kantenübergänge von Polygon Karten auf bereits gemessene Übergangszähler gesetzt werden und/oder eine iterative Verarbeitung erfolgt, bei der die Kartenerstellung für einen Datensatz von odometrischen Messungen immer wieder neu durchgeführt wird, und zwar unter Verwendung gegenseitig erstellter Karten.

28. Verfahren nach einem der Ansprüche 1 bis 27, **dadurch gekennzeichnet, dass** die erstellte Karte drei Raum-Dimensionen abbildet.

29. Verfahren nach Anspruch 28, **dadurch gekennzeichnet, dass** zur Abbildung der Karte für eine Anwendung in drei Dimensionen säulenartige geometrische Flächen mit polygonartigen Grundrissen und einem flachen oder schrägen Boden und Dach verwendet werden, wobei analog zur zweidimensionalen Ausführung der Polygon-Karte die Übergänge durch die dabei definierten Wände oder Boden- und Dachfläche gezählt und ausgewertet werden, indem bei zweidimensionaler Karte Übergänge über Linien und bei zweidimensionaler Karte jedoch Übergänge durch Flächen betrachtet werden.

**Claims**

1. A method for creating a map relating to location-related data on the likelihood of the future movement of a person in a spatial environment, such as a building, forest, tunnel system or public place, such as in particular a shopping center, airport or train station, wherein, in said method,

   - at least one person carries one or more sensors for odometric measurements, wherein the odometric measurements are error-prone due to inherent measurement inaccuracies of the sensor(s),
   - the at least one person moves by foot through the spatial environment,
   - information regarding the step lengths and/or step direction and/ or orientation of the sensor or the person is determined from the measurement signals of the sensor(s), and
   - based on said information, a map is created using a Bayesian estimator, the state-variable space thereof comprising a hypothesis both on the current step of a person and on an error of the odometric measurements and also the location-related data on the probabilities of the future movement of a person.

2. The method according to claim 1, **characterized in that**, as a Bayesian estimator, use is made of a hypothesis or particle filter and/or a Rao-Blackwellized particle filter and/or a Kalman filter and/or a Monte-Carlo hypothesis filter or combined forms of such filters.

3. The method according to claim 1 or 2, **characterized in that** the step of the person comprises the step length and optionally also the direction of movement of the person.

4. The method according to any one of claims 1 to 3, **characterized in that** the error of an odometric measurement relates to a drift parameter with respect to the determined step lengths and/or step direction and/or orientation of the sensor or the person.

5. The method according to any one of claims 1 to 4, **characterized in that** said map is created with a time delay during the movement of the person through the environment or after storage of the sensor measurement signals or the detected information on the step lengths and/or step direction and/or orientation of the sensor or the person.

6. The method according to any one of claims 1 to 5, **characterized in that** the computations for creating the map are performed either on an end device carried along, or on a server.

7. The method according to any one of claims 1 to 6, **characterized in that** the created map is used either for positioning or routing of the person or for improved positioning or routing of other persons.

8. The method according to any one of claims 1 to 7, **characterized in that**, for improvement of the information on the step lengths and/or step direction and/or orientation of the sensor or the person, use is made of measurement signals/data of further sensors, and/or that use is made of partial regions of a map of the environment for restricting the state space of the Bayesian estimator.

9. The method according to claim 8, **characterized in that**, as further sensors, use is made of sensors for positioning by satellite navigation and/or a magnetic compass and/or WLAN measurements and/or mobile phone position measurements and/or UWB measurements.

10. The method according to any one of claims 1 to 9, **characterized in that** use is made of real or virtual reference marks which can be perceived by the person and whose presence and optionally position are included as further parameters into the state space of the Bayesian estimator.

11. The method according to claim 10, **characterized in that** the entering of the position of the reference marks is performed by a man/machine interface arranged close to the person, and/or a button and/or a key and/or voice input.

12. The method according to any one of claims 1 to 11, **characterized in that** the method is combined with optical SLAM methods known from robotics by including, into the determining of the state space of the Bayesian estimator, the visual features measured by optical sensors.

13. The method according to claim 12, **characterized in that** the visual features are entered into the determining of the state space of the Bayesian estimator, as contributing factors into the weight computation and/or into an "importance sampling" step of the particle or as a multiplicative term into the weight, wherein each particle now also carries the state of each observed visual feature and adapts the location and spatial position and the accuracy thereof to the current observation of the features and of the other conditions of the particle, and wherein, further, in the same manner, also features of ultrasonic or infrared or microwave sensor systems can be used which thus can be considered and used as parts of the created map and/or can improve the creating of the map on the basis of odometric measurements.

14. The method according to any one of claims 1 to 13, **characterized in that** use is made of magnetic sensors by including the respective strength and direction of the local magnetic field as a feature and entering them corresponding to a visual feature into the computations.

15. The method according to any one of claims 1 to 14, **characterized in that** the person is provided with a plurality of sensors for reducing odoerrors in odometric measurement, wherein improved odometric measurements can be achieved by combining the measurement signals of the plurality of sensors.

16. The method according to claim 15, **characterized in that** said combination of the measurement signals of the sensors is an averaging of the information on the step lengths and/or step direction and/or orientation of the sensor or the person, or an averaging the raw data of the sensors.

17. The method according to any one of claims 1 to 16, **characterized in that** the sensor(s) for the odometric measurements can be placed on a foot or shoe of the at least one person or on another part of the body.

18. The method according to any one of claims 1 to 17, **characterized in that**, as a representation of the likelihood density function of the Bayesian estimator, use is made of the following mathematical product: the conditioned likelihood density of the errors of the current odometric measurements, conditioned to the errors of the odometric measurements in the last time-instant step, multiplied by the conditioned likelihood density of the current step vector U, conditioned to the current information on the step length and/or step direction and/or orientation of the sensor or the person and the current drift parameters.

19. The method according to any one of claims 1 to 18, **characterized in that**, for a map relating to location-related data on the likelihood of the future movement of a person in a spatial environment, use is made of data on transition probabilities over edges of spatially arranged polygons, wherein, in case of realization by means of a particle filter, the edge transitions of the particle at each polygon transition for this particle are counted and included into a weight computation.

20. The method according to claim 19, **characterized in that**, if polygons are used, the counters are updated and stored only for one edge between two adjacent polygons and not individually for all edges of all polygons, whereby the required storage capacity can be distinctly reduced.

21. The method according to any one of claims 1 to 20, **characterized in that** use is made of visual odometrical measurements known from robotics, wherein, with the aid of optical sensors, there is detected e.g. the change of the appearance of the environment for estimating the change of location and position of the person.

22. The method according to any one of claims 1 to 21, with use of polygon representations of the map, wherein the polygon grid is adapted to the environment so as to be configured with varying density, wherein the polygons can overlap and/or a plurality of polygon planes are used hierarchically and the transition counters are computed separately for each plane, and wherein, in the weight computation of the hypotheses of a particle filter, all planes are included.

23. The method according to any one of claims 1 to 22, **characterized in that**, if polygons are used for the map, the polygons are configured with overlap or without overlap and/or are regular or irregular and/or are configured in a plurality of planes.

24. The method according to any one of claims 1 to 23, **characterized in that**, if polygons are used for the map, use is made, instead of using a polygon grid, of a regular or irregular arrangement of circles or ovals or other geometric shapes, wherein, instead of counting an edge transition, there is detected the angle via which the shape is left during a step or part of a step, and an angle range transition counter is evaluated and updated for this angle, wherein, in case of an overlapping pattern of shapes, there is always selected that shape whose center is closest to the particle, and, in analogy with the realization by hexagons, the angle range transitions are counted and included in the weight computation.

25. The method according to any one of claims 1 to 24, **characterized in that** there are evaluated not only the counters for edge transitions and respectively angle range transitions per hexagon or other structure but also those for each combination of any number of previous transitions.

26. The method according to any one of claims 1 to 25, **characterized in that**, when creating the map, use is made of already created maps of other users or other walks of a person.

27. The method according to claim 26, **characterized in that**, when creating the map, use is made of already created maps of other users or other walks of a person **in that** the "a-priori" counters for edge transitions of polygon maps are placed onto already measured transition counters and/or an iterative processing is performed wherein the map creation for a data set of odometric measurements is continuously repeated using mutually created maps.

28. The method according to any one of claims 1 to 27, **characterized in that** the created map represents three spatial dimensions.

29. The method according to claim 28, **characterized in that**, for representation of the map for an application in three dimensions, use is made of columnar geometric surfaces with polygon-like footprints and a flat or oblique bottom or roof, wherein, in analogy with the two-dimensional version of the polygon map, the transitions are counted and evaluated by the therein defined walls or bottom and roof surfaces **in that**, in a two-dimensional map, transitions are observed via lines and, in a three-dimensional map, however, transitions are observed by surfaces.

## Revendications

1. Procédé d'établissement d'une carte relative à des informations de localisation sur la probabilité du déplacement futur d'une personne dans un environnement spatial tel que, par exemple, bâtiment, forêt, système de tunnels, place publique tel que notamment centre commercial, aéroport, gare de chemin de fer, où, dans ce procédé,

   - au moins une personne porte sur elle un ou plusieurs capteurs pour des mesures odométriques, les mesures odométriques étant entachées d'erreurs en raison d'imprécisions de mesure inhérentes au capteur ou aux capteurs,
   - cette personne se déplace à pied dans l'environnement spatial,
   - des informations relatives à des longueurs de pas et/ou la direction des pas et/ou l'orientation du capteur ou de la personne sont déterminées à partir des signaux de mesure du ou des capteurs,
   - une carte est établie sur la base de ces informations, en utilisant une fonction d'estimation de Bayes dont l'espace de variables d'état comprend une hypothèse aussi bien sur le pas actuel d'une personne et des erreurs des mesures odométriques que sur les informations de localisation relatives aux probabilités du déplacement future d'une personne.

2. Procédé selon la revendication 1, **caractérisé en ce qu'**il est utilisé comme fonction d'estimation de Bayes, un filtre d'hypothèses ou de particules et/ou un filtre de particules traité selon Rao-Backwell et/ou un filtre de Kalman et/ou un filtre d'hypothèses de Monte-Carlo ou des combinaisons de tels filtres.

3. Procédé selon la revendication 1 ou 2, **caractérisé en ce que** le pas de la personne comprend la longueur de pas et, en option, aussi le changement de direction de déplacement de la personne.

4. Procédé selon l'une des revendications 1 à 3, **caractérisé en ce que** l'erreur d'une mesure odométrique concerne un paramètre de décalage par rapport aux longueurs de pas et/ou la direction des pas et/ou l'orientation du capteur ou de la personne déterminées.

5. Procédé selon l'une des revendications 1 à 4, **caractérisé en ce que** la carte est établie avec une différence de temps pendant le déplacement de la personne dans l'environnement spatial ou après stockage des signaux de mesure du ou des capteurs ou des informations déterminées sur les longueurs de pas et/ou la direction des pas et/ou l'orientation du capteur ou de la personne.

**6.** Procédé selon l'une des revendications 1 à 5, **caractérisé en ce que** les calculs pour l'établissement de la carte sont effectués sur un terminal emporté ou sur un serveur.

**7.** Procédé selon l'une des revendications 1 à 6, **caractérisé en ce que** la carte établie est utilisée soit pour le positionnement ou le guidage de la personne ou pour un positionnement ou un guidage amélioré d'autres personnes.

**8.** Procédé selon l'une des revendications 1 à 7, **caractérisé en ce que** des signaux de mesure ou données de mesure d'autres capteurs sont utilisés pour améliorer les informations concernant les longueurs de pas et/ou la direction des pas et/ou l'orientation du capteur ou de la personne et/ou que des sections d'un plan de l'environnement sont utilisées pour limiter l'espace d'état de la fonction d'estimation de Bayes.

**9.** Procédé selon la revendication 8, **caractérisé en ce que** comme d'autres capteurs sont utilisés des capteurs pour un positionnement par navigation par satellites et/ou par une boussole magnétique et/ou par des mesures WLAN, et/ou des mesures de positions de la téléphonie mobile et/ou des mesures UWB.

**10.** Procédé selon l'une des revendications 1 à 9, **caractérisé en ce que** des marques de référence réelles ou virtuelles sont utilisées qui peuvent être reconnues par la personne et dont la présence et, le cas échéant, la position sont introduit comme un paramètre supplémentaire dans l'espace d'état de la fonction d'estimation de Bayes.

**11.** Procédé selon la revendication 10, **caractérisé en ce que** la saisie de la position des marques de référence est effectuée par une interface homme-machine se trouvant proche de la personne et/ou un bouton et/ou un contacteur et/ou une commande vocale.

**12.** Procédé selon l'une des revendications 1 à 11, **caractérisé en ce que** le procédé est combiné avec des procédés SLAM connus de la robotique, en prenant en compte les caractéristiques visuelles, qui sont mesurées avec des capteurs optiques, pour la détermination de l'espace d'état de la fonction d'estimation de Bayes.

**13.** Procédé selon la revendication 12, **caractérisé en ce que** les caractéristiques visuelles sont prises en compte pour la détermination de l'espace d'état de la fonction d'estimation de Bayes, comme coefficients contribuant au calcul de pondération et/ou dans une étape dite « importance sampling » des particules ou comme terme de multiplication dans la pondération, chaque particule portant alors aussi l'état d'une caractéristique visuelle observée et adaptant la localisation et position dans l'environnement de celle-ci ainsi que la précision de l'observation actuelle des caractéristiques, et que de cette même façon peuvent être utilisées des caractéristiques de systèmes de capteurs d'ultrason ou d'infrarouge ou de microondes qui sont alors considérées et utilisées comme partie de la carte établie et/ou améliorent l'établissement de la carte sur la base des mesures odométriques.

**14.** Procédé selon l'une des revendications 1 à 13, **caractérisé en ce que** des capteurs magnétiques sont utilisés, en saisissant l'amplitude et l'orientation du champ magnétique local comme caractéristique et en les prenant en compte dans les calculs comme correspondant à une caractéristique visuelle.

**15.** Procédé selon l'une des revendications 1 à 14, **caractérisé en ce que** la personne est équipée de plusieurs capteurs, afin de réduire les erreurs d'une mesure odométrique, une combinaison des signaux de mesure de plusieurs capteurs permettant d'obtenir des mesures odométriques améliorées.

**16.** Procédé selon la revendication 15, **caractérisé en ce que** la combinaison des signaux de mesure des capteurs est une mise à la moyenne des informations concernant les longueurs de pas et/ou la direction des pas et/ou l'orientation du capteur ou de la personne ou une mise à la moyenne des données brutes des capteurs.

**17.** Procédé selon l'une des revendications 1 à 16, **caractérisé en ce que** le ou les capteurs sont disposés pour les mesures odométriques sur un pied ou une chaussure de la personne ou des personnes ou sur une autre partie du corps.

**18.** Procédé selon l'une des revendications 1 à 17, **caractérisé en ce que** comme représentation de la fonction de densité de probabilité de la fonction d'estimation de Bayes, est choisi le produit mathématique suivant : la densité de probabilité conditionnelle des erreurs de la mesure odométrique actuelle, conditionnée sur l'erreur de la mesure odométrique dans la dernière période de mesure, multipliée avec la densité de probabilité conditionnelle du vecteur de pas actuel conditionné sur l'information actuelle sur les longueurs des pas et/ou la direction des pas et/ou l'orientation du capteur ou de la personne et les paramètres de décalage actuels.

**19.** Procédé selon l'une des revendications 1 à 18, **caractérisé en ce qu'**il est utilisé comme carte relative à des informations de localisation sur la probabilité du déplacement futur d'une personne dans un environnement spatial, des indications sur des probabilités de transition à travers des bords de polygones disposés dans l'espace, où, en cas d'exploitation à l'aide d'un filtre de particules, les transitions de bord de la particule sont comptées pour cette particule à chaque transition de polygone et sont prises en compte dans un calcul de pondération.

**20.** Procédé selon la revendication 19, **caractérisé en ce que**, lors d'une utilisation de polygones, les compteurs ne sont actualisés et stockés que pour un bord entre deux polygones avoisinants et non pas pour tous les bords de tous les polygones individuellement, ce qui permet de réduire sensiblement le besoin de mémoire de stockage.

**21.** Procédé selon l'une des revendications 1 à 20, **caractérisé en ce que** des mesures odométriques visuelles connues de la robotique sont utilisées, le changement de l'apparence de l'environnement étant saisi à l'aide de capteurs optiques afin d'estimer le changement de localisation et de situation de la personne.

**22.** Procédé selon l'une des revendications 1 à 21, en utilisant des représentations de polygones de la carte, où la trame de polygone est adaptée à l'environnement afin d'être établie avec des densités différentes, les polygones pouvant se chevaucher et/ou plusieurs polygones pouvant être établis de manière hiérarchique, et les compteurs de transitions pouvant être calculés pour chaque plan, et où tous les plans sont pris en compte dans le calcul de pondération des hypothèses d'un filtre de particules.

**23.** Procédé selon l'une des revendications 1 à 22, **caractérisé en ce que** lors d'une utilisation de polygones pour la carte, les polygones sont établis se chevauchant ou non et/ou de manière homogène ou non et/ou sur plusieurs plans.

**24.** Procédé selon l'une des revendications 1 à 23, **caractérisé en ce que** lors d'une utilisation de polygones pour la carte, une disposition homogène ou inhomogène de cercles ou d'ovales ou d'autres formes géométriques est utilisée à la place d'une trame de polygones, où à la place du comptage d'une transition de bord, l'angle est saisi sous lequel la forme est quittée lors d'un pas ou d'une partie d'un pas et où, pour cet angle, un compteur de transition de plage d'angles est exploité et actualisé, où pour une trame de formes se chevauchant, il est sélectionné toujours la forme dont le centre est le plus proche de la particule et compté, de manière analogue à l'exploitation avec des hexagones, et prises en compte pour le calcul de pondération, les transitions de plage d'angles.

**25.** Procédé selon l'une des revendications 1 à 24, **caractérisé en ce qu'**il est compté et exploité non seulement les compteurs pour les transitions de bord ou les transitions de plage d'angles par hexagone ou pour chaque autre structure, mais aussi pour chaque combinaison d'un nombre libre de transitions précédentes.

**26.** Procédé selon l'une des revendications 1 à 25, **caractérisé en ce que** des cartes déjà établies d'autres utilisateurs ou d'autres parcours d'une personne sont utilisées pour l'établissement de la carte.

**27.** Procédé selon la revendication 26, **caractérisé en ce que** des cartes déjà établies d'autres utilisateurs ou d'autres parcours d'une personne sont utilisées pour l'établissement de la carte, en posant les compteurs « à priori » pour des transitions de bord de cartes à polygones, sur des compteurs de transition déjà mesurés et/ou en effectuant une exploitation itérative, lors de laquelle l'établissement de la carte est renouvelé pour un ensemble de données de mesure de mesures odométriques, et cela en utilisant des cartes établies réciproquement.

**28.** Procédé selon l'une des revendications 1 à 27, **caractérisé en ce que** la carte établie représente trois dimensions spatiales.

**29.** Procédé selon la revendication 28, **caractérisé en ce que**, pour une représentation de la carte pour une application en trois dimensions, des surfaces géométriques en forme de colonnes avec des bases de type polygone et un fond et un toit plats ou en pente sont utilisées, où, de manière analogue à la version deux-dimensionnelle de la carte à polygones, sont comptées les transitions par les parois ou surface de fond ou de toit définies, en observant sur une carte deux-dimensionnelle les transitions de lignes et sur une carte tridimensionnelle, par contre, les transitions à travers des surfaces.

**Fig.1**

$\mathbf{P}_k$

$\mathbf{U}_k$

$\mathbf{P}_{k-1}$

**Fig.2**

Fig.3

Systemübersicht

Kartenbestimmungs-
Rechner (2b)

(14) Weitere
a-priori
P-Karten;
optional

(10) Particle Speicher

(11)
RBPF Steuerung

(12)
Particle
Verarbeitung

Fußgänger,
welcher dieKarte
erstellt

(4) Odometrie-
Berechnung

(13b) P-Karten-
Berechnung

Weitere
Sensoren (3)

IMU Daten

(1)

Am Fuß/Schuh
montierte IMU

**Fig.4**

**Systemübersicht**

**Fig.5**

EP 2 478 335 B1

Particle Gewicht Zeitpkt. k-1

(10) Particle Speicher

(11) RBPF Steuerung:

Neues Gewicht Zeitpkt. k

Pose 0:k bedeutet Sequenz der Poses vom Beginn bis k

Weitere Sensoren, optional

(3)

Sensor-messwerte

(4) Odometrie-Berechnung

IMU Rohdaten

Particle Odometrie Fehler-zustand k-1

(5) Odometrie Fehlerzustands-berechn.

Particle Odometrie Fehlerzustand k

(6) Schritt-Vektor Berechnung

Schritt-schätzung k

Sensormesswerte

Particle Pose Zeitpkt. k-1

Particle P-Karte Zeitpkt. k-1

(13a) Positions-bzw. P-Karten-Berechnung

Particle Schnitt U sowie Particle Pose zum Zeitpunkt k

(7) P-Karten Likelihood Funktionsberechn.

(8) P-Karten-Aktualisierung

(9) Likelihood Funktion berechn. f. weitere Sensoren, optional

(14) Weitere a-priori P-Karten aus Datenbank; opt.

(12) Verarbeitung für das Particle i bestehend aus (5)-(9).

Ergebnisse für jedes Particle zum Zeitpunkt k

**Fig.6**

EP 2 478 335 B1

Navigations-Koordinatensystem (Koordinatensystem der Karte; Ziel-Koordinatensystem)

„Person zero heading"-Koordinaten-System; Orientierung der Person zum Zeitpunkt k-1 (d.h. bezogen auf die

„Sensor zero heading"-Koordinatensystem; Ausrichtung zum Zeitpunkt k-1 (d.h. bezogen auf Sensor

Schrittänderung der Person im "person zero heading" Koordinatensystem

Person ⊙ lief; ursprünglich nach ① zeigend (orientierung) nach ② zeigend

**Fig.7**

Tatsächliches, unbekanntes
weißes
Odometrierauschen

Odometrie-Information
in „Sensor zero
heading" Koordinaten

$Z^{\psi}_k + n^{\psi}_k$

$k$

$Z^r_k + n^r$

$k-1$

Odometrie-
Informationen Z

Roh
Daten
Sensoren

| Odometrie Berechnung | Koordinaten-Transformation ins „Sensor zero heading" Koordinaten-system | Ziehe pro Particle additive Rauschterme; Berechne $Z^{\psi'i}_k$ & $Z^{r'i}_k$ Particle-Index /i |

$(\longrightarrow$ Fig.9$)$

Particlebezogene
weiße
Rauschterme

Einmal pro
Schritt des
Fußgängers
durchgeführt

Durchgeführt pro particle $i$

**Durchgeführt pro Schritt des Fußgängers**

**Fig.8**

Particle i zieht den Schritt in „Sensor zero heading" koord.

$$Z^{\psi/i}{}_k = Z^{\psi}{}_k + n^{\psi}{}_k - n^{\psi/i}{}_k$$

$$Z^{r/i}{}_k = Z^{r}{}_k + n^{r}{}_k - n^{r/i}{}_k$$

Änderung der Pose der Person im „person zero heading" Koordinatensyst., gezogen für particle i

Bestimme pro particle einen neuen Winkel $\varphi_k^{c/i}$; dann neuen x,y-Schrittvektor $r^{/i}{}_k$ bestimmen (Rotation von $Z^{r/i}{}_k$ um $\varphi_k^{c/i}$; d.h. $\|r^{/i}{}_k\| = \|Z^{r/i}{}_k\|$)

Bestimme pro particle einen neuen Odometrie Richtungsdrift $\gamma^{/i}{}_k$ Berechne Orientierungänderung der Person für particle i: $\psi^{/i}{}_k = Z^{\psi/i}{}_k - \gamma^{/i}{}_k$; Bewege particle i um Schritt x,y- Schrittvektor $r^{/i}{}_k$

$= U^i$

Particle bezog. Winkelabweichung und Odometrie Richtungsdrift

Durchgeführt pro particle i

Durchgeführt pro Schritt des Fußgängers

**Fig.9**

EP 2 478 335 B1

Kante: $e(\mathbf{U}_k)$

$\mathbf{P}_k$

$\mathbf{P}_{k-1}$

$\mathbf{U}_k$

$H_h$

$H_j$

**Fig.10**

**Fig.11**

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KRACH ; BERNHARD ; ROBERTSON ; PATRICK.** Integration of Foot-Mounted Inertial Sensors into a Bayesian Location Estimation Framework. *WPNC 2008,* 27. Marz 2008
- **KRACH ; BERNHARD ; ROBERTSON ; PATRICK.** Cascaded Estimation Architecture for Integration of Foot-Mounted Inertial Sensors. *PLANS 2008,* 05. Mai 2008
- **ERIC FOXLIN.** Pedestrian Tracking with Shoe-Mounted Inertial Sensors. IEEE Computer Society, November 2005
- **PATRICK ROBERTSON ; MICHAEL ANGERMANN ; BERNHARD ; KRACH ; MOHAMMED KHIDER.** *Inertial Systems Based Joint Mapping and Positioning for Pedestrian Navigation,* 22. September 2009
- **PATRICK ROBERTSON ; MICHAEL ANGERMANN ; BERNHARD KRACH.** *Simultaneous Localization and Mapping for Pedestrians using only Foot-Mounted Inertial Sensors,* 30. September 2009